(19) Europäisches Patentamt

European Patent Office

Office européen des brevets

(11) **EP 1 501 298 B1**

(12) **EUROPEAN PATENT SPECIFICATION**

(45) Date of publication and mention
of the grant of the patent:
**02.08.2006 Bulletin 2006/31**

(51) Int Cl.:
***H04N 7/01*** (2006.01)

(21) Application number: **04102871.3**

(22) Date of filing: **22.06.2004**

(54) **Method and apparatus of identifying a telecine portion and bad-edits in a video sequence**

Verfahren und Vorrichtung zum Identifizieren von Fernsehkinoanteilen und Editierfehlern in einer Videosequenz

Procédé et dispositif servant à identifier une partie de vidéo convertie en télécinéma et des défauts d'édition

(84) Designated Contracting States:
**DE FR GB IT NL**

(30) Priority: **21.07.2003 KR 2003049909**

(43) Date of publication of application:
**26.01.2005 Bulletin 2005/04**

(73) Proprietor: **SAMSUNG ELECTRONICS CO., LTD.
Suwon-si, Gyeonggi-Do 442-742 (KR)**

(72) Inventors:
 • **LEE, Young-ho
 Seoul, (KR)**

 • **YANG, Seung-joon
 Gangnam-gu,Seoul, (KR)**

(74) Representative: **Read, Matthew Charles et al
Venner Shipley LLP
20 Little Britain
London EC1A 7DH (GB)**

(56) References cited:
**WO-A-97/39577      US-B1- 6 509 933**

**Description**

The present invention relates to a method and associated apparatus for detecting a bad-edit portion of a television signal.

Humans perceive a continuous image if more than 16 frames appear in a second. In other words, in an image in motion, 16 frames per second is the minimum sampling frequency (i.e., Nyquist frequency) for sampling a signal for which information will be preserved. In order to achieve this, an image for a movie is processed at a speed of 24 frames per second, and an image for a television (TV) is processed at a speed of 25 to 30 frames per second.

A movie film uses a progressive system that instantaneously stores every picture in a film and progressively projects the pictures on a screen. In a TV, since an image is basically transmitted over airwaves, each picture is filmed and transmitted by the scanning of several hundreds of scanning lines, and then displaying the scanned lines on a screen of a cathode ray (or Braun) tube after transmission. In the NTSC (National Television System Committee) colour TV system adopted in countries like the United States, Japan, and Korea, 30 frames, each of which is composed of 525 scanning lines, per second are transmitted, and in the PAL (Phase Alternation by Line) system or SECAM (Sequential Couleur a Memoire) system, 25 frames, each of which is composed of 625 scanning lines, per second are transmitted.

Also, the TV uses an interlaced scanning method which divides one picture (i.e., frame) into two fields and alternately scans the two fields in order to effectively present a moving image using limited scanning lines. The divided fields are called top and bottom fields, odd and even fields, upper and lower fields, etc. Accordingly, the NTSC system processes 60 fields of image per second, and the PAL or SECAM system processes 50 fields of image per second.

When a movie is televised through a TV, every frame of movie film is passed through a converter called a telecine (which is a compound word of a television and a cinema). If the films are reproduced at TV picture reproducing speed without matching the number of film frames per second to the number of television frames per second, a viewer watches the image in fast motion. This is because the NTSC system provides 30 frame per second compared with 24 frames as is the case for movie film. Accordingly, in order to transmit the movie film to the television operating on the NTSC system, 24 frames of film per second have to be conerted into 60 television fields. This translation is achieved by obtaining 5 fields from 2 frames of film pictures. A simple and practically used method is to scan 3 fields for the first film picture and to scan 2 fields for the other, which is called "3:2 pull-down method". In the case of transmitting the movie through the PAL or SECAM TV system, 50 fields should be obtained from 25 pictures (i.e., frames). This means two fields should be obtained with respect to one frame. This method of scanning two fields with respect to a frame is called a "2:2 pull-down" system.

Basically, it is possible to reproduce an original image of 24 frames such as an original movie through a DVD (Digital Video Disk) without having to perform intermediate processing. However, since the majority of currently available display devices such as television use an interlaced scanning method, the DVD is actually manufactured to operate using the interlaced scanning method. Accordingly, in order to convert the title created using the interlaced scanning method to the progressive system, the 3:2 pull-down method should be performed in a reverse manner. It is most important in such de-interlacing work to accurately recognise the 3:2 pull-down sequence (such a 3:2 pull-down state is usually called "film mode" because it is mainly applied in a movie).

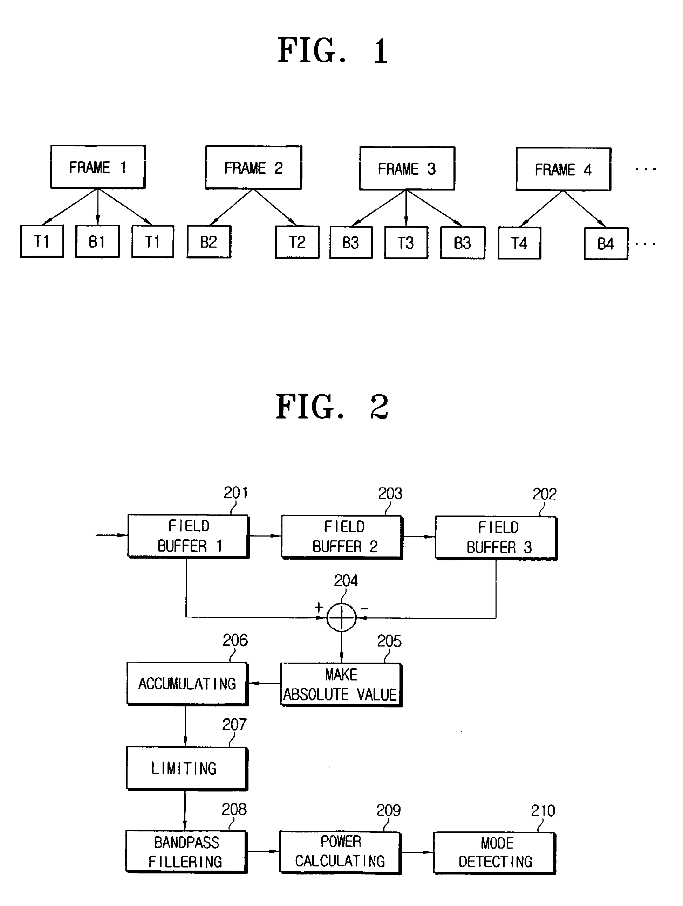

Figure 1 is a view showing the 3:2 pull-down processing. Referring to Figure 1, two frames are scanned and converted into 5 fields. One film frame is therefore composed of a top field of odd-number lines and a bottom field of even-number lines. To obtain 3 fields from one every one frame for use in a television, any one of the top field and the bottom field has to be repeatedly used. In the drawing, a top field of a frame 1 is expressed by T1, a bottom field of the frame 1 by B1, a top field of a frame 2 by T2, and a bottom field of the frame 2 by B2.

Figure 2 is a block diagram showing a known 3:2 pull-down image detection process. Referring to Figure 2, if it is assumed that 10 fields detected by the 3:2 pull-down are F1, F2, F3, F4, F5, F6, F7, F8, F9, and F10, a film mode is detected by using the periodicity of a Summed Absolute Difference (SAD), which is 5. In other words, if the SAD is obtained by the period of two fields, the SADs of F1-F3, F6-F8 become very small (if there is no noise, the SAD is even close to 0). The SADs are small, because the repeated field is subtracted from the original field. By using this regularity, in the film mode detection (3:2 pull down image detection), a difference of two fields at an interval of approximately 1/30 second is obtained for each pixel (204), an absolute value of difference is obtained (205), and then intermediate data is created by adding up the absolute values for all the pixels (206). For example, if |F1-F3| =D1, |F2-F4| =D2,| F3-F4 =D3,..., SADs D1 and D6 have very small values and the rest SADs have large values. The SADs have a regularity of small, large, large, large, small.

In a case that there occurs an error in converting a picture, however, the SAD greatly increases. In consideration of this, limiting is performed with a threshold value M1 such that SADs larger than the threshold value M1 are substituted by the threshold value M1 (207). Through the limiting, the sequence of SAD D1, D2, D3, ... has a waveform having the periodicity of 5 and amplitude moving within a certain limitation. When such a waveform is passed through a digital threshold bandpass filter (208) having a center of $2\pi/5$ and DC gain of 0, the waveform having '5' periodicity has a signal similar to a sine wave having a predetermined amplitude. Otherwise, the waveform having periodicity other than '5' has approximately 0 signal output. Accordingly, calculating the power of the signal similar to the sine wave (209) would render a high power value if the signal has '5' periodicity, and approximately 0 if the signal has the periodicity other than '5'. If the calculated power value is greater than a predetermined threshold value M2, it is determined that the signal is in a 3:2 pull-down image. Otherwise, it is determined that the signal is not in a 3:2 pull-down image (210).

The SAD between two fields of the 3:2 pull-down stream having a 1/30 second interval therebetween has '5' periodicity, but the periodicity would be affected if noise is present. Also, when the limiting block removes a peak which appears when a picture is converted, the peak is removed and the value is replaced by a predetermined value, even in the case that the SAD has a small value according to the input stream. Therefore, an incorrect value may be output. Also, the mode detection block has to have a predetermined threshold value, but in such a case, since a power is varied depending on the input stream, it is incorrect to set the threshold value to a fixed value.

Accordingly, even if the conventional 3:2 pull-down image detection method properly sets a threshold through many experiments, it cannot accurately detect a 3:2 pull-down image in a case that there is much noise in the input stream and thus many variations in the SAD.

Also, when there occurs a bad-edit (bad scene cut) in the editing process which affects the input image signal, the conventional 3:2 pull-down image detection method causes a comb in the de-interlaced image signal.

The present invention has been developed in order to solve the above problems in the related art. Accordingly, an aspect of the present invention is to provide an image signal detecting apparatus and a method thereof capable of detecting a 2:2 pull-down image as well as a 3:2 pull-down image, and removing a comb caused by a bad-edit.

US-B-6,509,933 and WO-A-9 739 577 describe an apparatus for detecting a pull-down sequence and an edit point in a video signal.

The present invention relates to a method of and apparatus for detecting a bad-edit portion of a television signal as set out in claims 1 and 4.

The present invention is advantageous because not only is the film mode identified but also any bad-edits are identified. If a bad-edit is not identified in the input stream, erroneous results may be caused.

An embodiment of the present invention will now be described, by way of example only, with reference to Figures 1, and 3-16D of the accompanying drawings, in which:

Figure 1 is a view explaining a 3:2 pull-down process;

Figure 2 is a block diagram showing a known 3:2 pull-down image detection process;

Figure 3 is a block diagram showing an image signal detecting apparatus according to the present invention;

Figure 4 is a block diagram showing the 3:2 pull-down main detection unit and the 3:2 pull-down sub-detection unit of Figure 3;

Figure 5 is a block diagram showing the first threshold value calculation unit of the 3:2 pull-down main detection unit of Figure 3;

Figure 6 is a block diagram showing the second threshold value calculation unit of the 3:2 pull-down sub-detection unit of Figure 3;

Figure 7 is a block diagram showing the 2:2 pull-down main detection unit and the 2:2 pull-down sub-detection unit of Figure 3;

Figure 8 is a block diagram showing the first threshold value calculation unit of the 2:2 pull-down main detection unit of Figure 3;

Figure 9 is a block diagram showing the second threshold value calculation unit of the 2:2 pull-down sub-detection unit of Figure 3;

Figure 10 is a flowchart showing an image signal detecting method performed by the apparatus of Figure 3;

Figure 11 is a flowchart showing a 3:2 pull-down image detecting method performed by the 3:2 pull-down main detection unit of Figure 3;

Figure 12 is a flowchart showing a 3:2 pull-down image detecting method performed by the 3:2 pull-down sub-detection unit of Figure 3;

Figure 13 is a flowchart showing a 2:2 pull-down image detecting method performed by the 2:2 pull-down main detection unit of Figure 3;

Figure 14 is a flowchart showing a 2:2 pull-down image detecting method performed by the 2:2 pull-down sub-detection unit of Figure 3;

Figures 15A to 15F are views showing examples of a bad-edit occurring in the 3:2 pull-down image to explain a bad-edit detecting method performed by the bad-edit detection unit of Figure 3; and

Figures 16A to 16D are views showing examples of a bad-edit occurring in the 2:2 pull-down image to explain a bad-edit detecting method performed by the bad-edit detection unit of Figure 3.

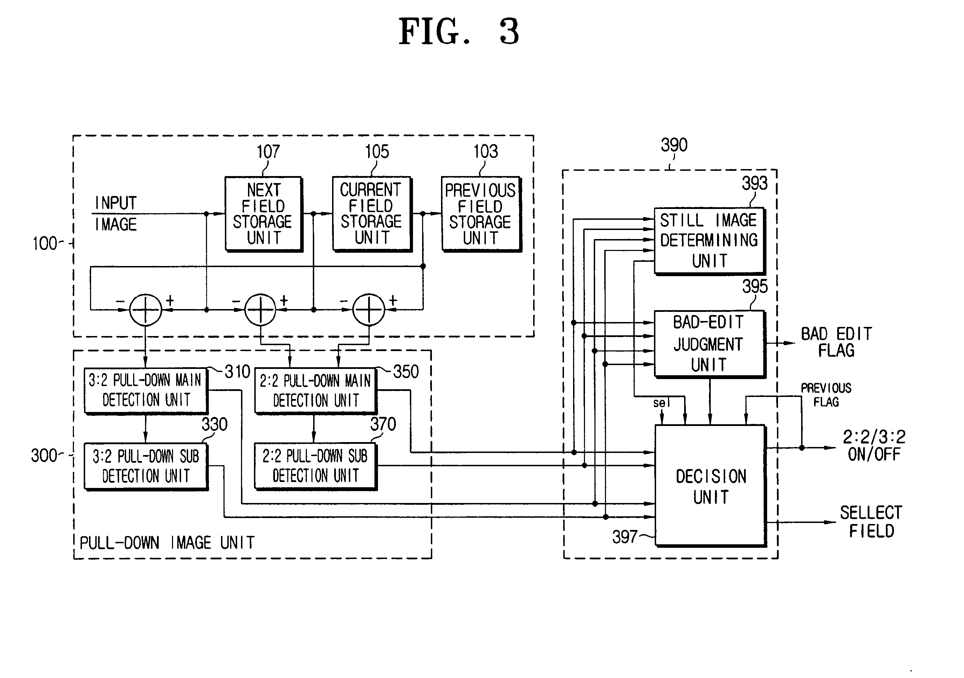

Referring to Figure 3, the video signal detecting apparatus includes a summed absolute difference (SAD) calculation unit 100, a pull-down image detection unit 300, and a pull-down sequence decision unit 390.

The SAD calculation unit 100 includes a previous field storage unit 103 for storing a previous field (n-1) which is input immediately before a currently-input video signal, a current field storage unit 105 for storing a currently-input field (n), and a next field storage unit 107 for storing a next field (n+1) which follows the current field (n). The SAD calculation unit 100 obtains pixel values with respect to the fields (n-1), (n), (n+1) stored in the previous field storage unit 103, the current field storage unit 105, and the next field storage unit 107, respectively, and calculates a difference of the pixel values between the fields, i.e., calculates summed absolute differences (SADs).

The pull-down image detection unit 300 includes a 3:2 pull-down main detection unit 310, a 3:2 pull-down sub detection unit 330, a 2:2 pull-down main detection unit 350, and a 2:2 pull-down sub-detection unit 370. The 3:2 pull-down main detection unit 310 detects a 3:2 pull-down image based on a SAD between fields spaced from each other by one period. The 3:2 pull-down sub detection unit 330 detects a 3:2 pull-down image based on an absolute change amount (or absolute difference) with respect to the SAD between the fields spaced from each other by one period. Also, the 2:2 pull-down main detection unit 350 detects a 2:2 pull-down image based on a SAD between consecutive fields. The 2:2 pull-down sub-detection unit 370 detects a 2:2 pull-down image based on an absolute difference with respect to the SAD between the consecutive fields.

The pull-down sequence decision unit 390 includes a still image determining unit 393, a bad-edit detection unit 395, and a decision unit 397. The still image determining unit 393 determines if an input video signal is a still image based on the SADs and the absolute differences between the SADs calculated by the SAD calculation unit 100. The bad-edit detection unit 395 detects whether there occurs a bad-edit in the pull-down image detected by the 3:2 pull-down main detection unit 310, the 3:2 pull-down sub-detection unit 330, the 2:2 pull-down main detection unit 350, and the 2:2 pull-down sub detection unit 370, respectively. The decision unit 397 decides whether the video signal is a pull-down image or not based on the result of detecting the pull-down image by the pull-down image unit 300, the result of determining the still image by the still image determining unit 393, and the result of detecting the occurrence of the bad-edit by the bad-edit judgment unit 395, respectively.

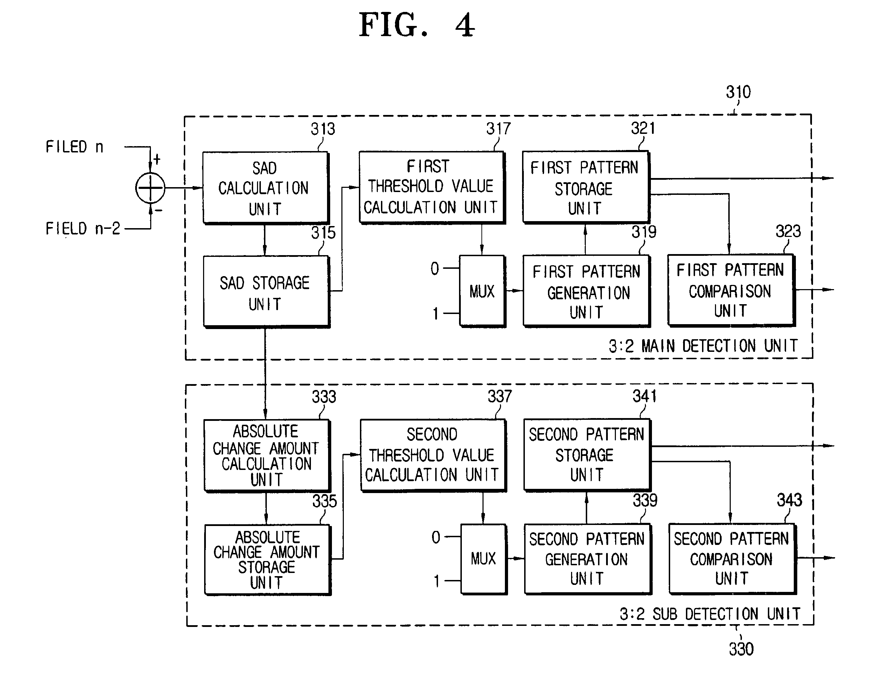

Referring to Figure 4, the 3:2 pull-down main detection unit 310 includes a SAD calculation unit 313, a SAD storage unit 315, a first threshold value calculation unit 317, a first pattern generation unit 319, a first pattern storage unit 321, and a first pattern comparison unit 323.

The SAD calculation unit 313 calculates a SAD between fields of the video signal which are spaced from each other by one period. In other words, the SAD calculation unit calculates a SAD between a previous field (n-1) of the input video signal and a next field (n+1). The calculation of SAD between the previous field (n-1) and the next field (n+1) by the SAD calculation unit 313 is repeatedly performed with respect to the fields of the consecutively input video signals. The SAD storage unit 315 consecutively stores the SADs calculated by the SAD calculation unit 313. In order to consecutively store the calculated SADs, the SAD storage unit 315 is implemented by a predetermined number of FIFO (First-In First-Out) buffers. The first threshold value calculation unit 317 calculates a first threshold value using the stored SADs. The first pattern generation unit 319 generates patterns of the SADs according to the calculated first threshold value. The first pattern storage unit 321 consecutively stores the patterns of the SADs generated by the first pattern generation unit 319. In order to consecutively store the SAD patterns generated by the first pattern generation unit 319, the first pattern storage unit 321 is implemented by a predetermined number of FIFO buffers. The first pattern comparison unit 323 compares the pattern of the SAD stored in the first pattern storage unit 321 with a predetermined basic pattern of the SAD.

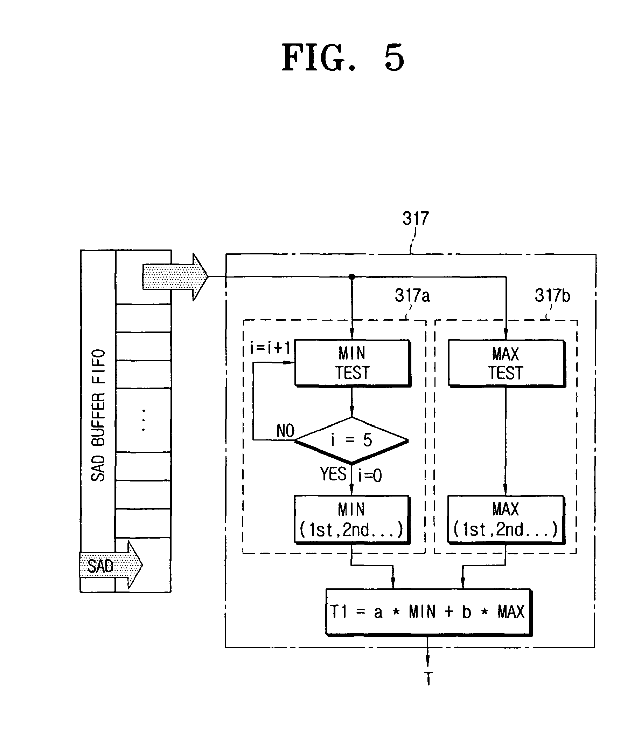

Also, the first threshold value calculation unit 317 includes a first minimum value detection unit 317a and a first maximum value detection unit 317b (see Figure 5). The first minimum value detection unit 317a detects a minimum value of the continuous 5 SADs stored in the SAD storage unit 315. The first maximum value detection unit 317b detects a maximum value of 5 continuous SADs. In this case, since the SAD with respect to the fields of the 3:2 pull-down image has a minimum value once every 5 periods, the first minimum value detection unit 317a detects a minimum value once every 5 periods and thus can be implemented to reduce a load to the operations.

Also, the sub-detection unit 330 includes an absolute difference calculation unit 333, an absolute difference storage unit 335, a second threshold value calculation unit 337, a second pattern generation unit 339, a second pattern storage unit 341, and a second pattern comparison unit 343.

The absolute difference calculation unit 333 calculates an absolute difference between the SADs calculated by the SAD calculation unit 313. The absolute difference storage unit 335 consecutively stores the calculated absolute differences. The second threshold value calculation unit 337 calculates a second threshold value using the stored absolute differences. The second pattern generation unit 339 generates patterns of the absolute differences according to the calculated second threshold value. The second pattern storage unit 341 consecutively stores the patterns of the absolute differences generated by the second pattern generation unit 339. In an exemplary embodiment, the absolute difference storage unit 335 and the second pattern storage unit 341 are implemented by FIFO buffers in the same manner as the SAD storage unit 315 and the first pattern storage unit 321.

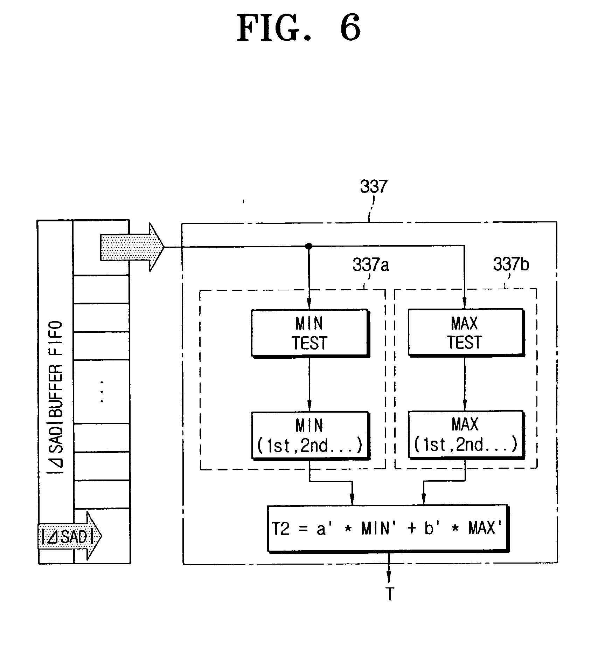

The second pattern comparison unit 343 compares the pattern of the absolute difference stored in the second pattern storage unit 341 with a predetermined basic absolute difference pattern. Also, the second threshold value calculation unit 337 includes a second minimum value detection unit 337a and a second maximum value detection unit 337b (see Figure 6). The second minimum value detection unit 337a detects a minimum value of 5 continuous absolute differences stored in the absolute difference storage unit 335. The second maximum value detection unit 337b detects a maximum value of the 5 continuous absolute differences. In an exemplary embodiment, the second pattern storage unit 341 is implemented so that the absolute differences between the SADs stored in the first pattern storage unit 321 are consecutively stored in the second pattern storage unit 341. In this embodiment, the first threshold value calculation unit 317 of the 3:2 pull-down main detection unit 310 and the second threshold value calculation unit 337 of the 3:2 pull-down sub-detection unit 330 detect the maximum value and the minimum value with respect to the 5 consecutive values only. This is because the basic pattern of the SADs and the absolute change amounts with respect to the 3:2 pull-down image has the 5 repeated consecutive values. However, this should not be considered as limiting because other numbers of values may be calculated. For instance, the first threshold value calculation unit 317 of the 3:2 pull-down main detection unit 310 and the second threshold value calculation unit 337 of the 3:2 pull-down sub detection unit 330 may detect a minimum value and a maximum value from more than 5 consecutive values.

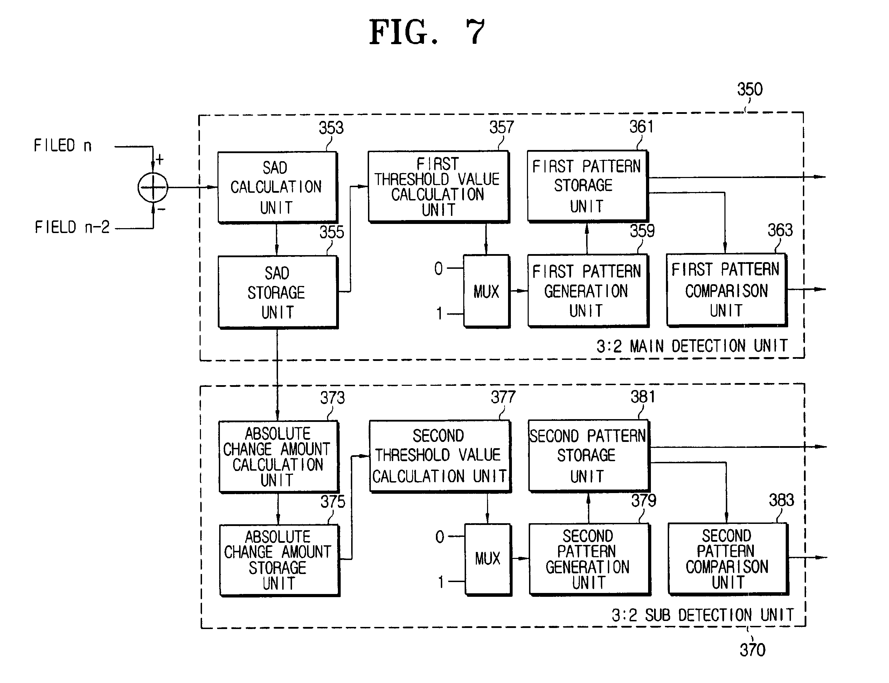

Figure 7 is a block diagram showing the 2:2 pull-down main detection unit and the 2:2 pull-down sub detection unit of FIG 3. Referring to Figure 7, the 2:2 pull-down main detection unit 350 includes a SAD calculation unit 353, a SAD storage unit 355, a first threshold value calculation unit 357, a first pattern generation unit 359, a first pattern storage unit 361, and a first pattern comparison unit 363.

The SAD calculation unit 353 calculates a SAD between consecutive fields of a video signal. In other words, the SAD calculation unit 353 calculates a SAD between a previous field (n-1) and a current field (n) with respect to a video signal. The SAD storage unit 355 consecutively stores the SADs calculated by the SAD calculation unit 353. In order to consecutively store the calculated SADs, the SAD storage unit 355 is implemented as a predetermined number of FIFO buffers. The first threshold value calculation unit 357 calculates a first threshold value using the stored SADs. The first pattern generation unit 359 generates patterns of the SADs according to the calculated first threshold value. The first pattern storage unit 361 consecutively stores the patterns of the SADs generated by the first pattern generation unit 359. In order to consecutively store the SAD patterns generated by the first pattern generation unit 359, the first pattern storage unit 361 is implemented by a predetermined number of FIFO buffers. The first pattern comparison unit 363 compares the pattern of the SAD stored in the first pattern storage unit 361 with a predetermined basic pattern of the SAD.

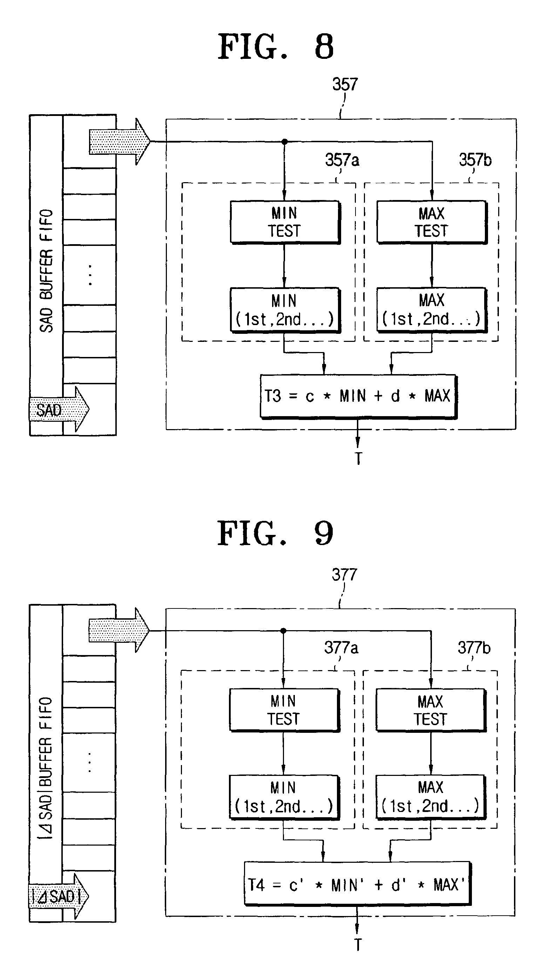

Also, the first threshold value calculation unit 357 includes a first minimum value detection unit 357a and a first maximum value detection unit 357b (see Figure 8).

The first minimum value detection unit 357a detects a minimum value of the SADs with respect to a specified section of the SADs stored in the SAD storage unit 355. The first maximum value detection unit 357b detects a maximum value of the SADs with respect to the specified section. In this case, since the 2:2 pull-down sequence has the minimum value of the SADs between two fields of the same frame and has the maximum value of the SADs between consecutive fields of two adjacent frames, the first minimum value detection unit 357a and the first maximum value detection unit 357b can be implemented to detect the minimum value and the maximum value with respect to the SADs between the spaced fields. In an exemplary embodiment, the first minimum value detection unit 357a and the first maximum value detection unit 357b are implemented so that the first minimum value detection unit 357a detects the SAD between the fields of the same frame, and the first maximum value detection unit 357b detects the SAD between the fields of the adjacent frames.

Also, the sub-detection unit 370 includes an absolute difference calculation unit 373, an absolute difference storage unit 375, a second threshold value calculation unit 377, a second pattern generation unit 379, a second pattern storage unit 381, and a second pattern comparison unit 383. The absolute difference calculation unit 373 calculates an absolute difference between the SADs calculated by the SAD calculation unit 353. The absolute difference storage unit 375 consecutively stores the calculated absolute differences. The second threshold value calculation unit 377 calculates a second threshold value using the stored absolute differences. The second pattern generation unit 379 generates patterns of the absolute differences according to the calculated second threshold value. The second pattern storage unit 381 consecutively stores the patterns of the absolute differences generated by the second pattern generation unit 379. In an exemplary embodiment, the absolute difference storage unit 375 and the second pattern storage unit 381 are implemented by FIFO buffers in the same manner as the SAD storage unit 355 and the first pattern storage unit 361.

The second pattern comparison unit 383 compares the pattern of the absolute difference stored in the second pattern storage unit 381 with a predetermined basic pattern of the absolute difference. Also, the second threshold value calculation unit 387 includes a second minimum value detection unit 377a and a second maximum value detection unit 377b (see Figure 9) The second minimum value detection unit 377a detects a minimum value of the absolute differences with respect to a specified section of the absolute differences stored in the absolute difference storage unit 375. The second maximum value detection unit 377b detects a maximum value of the absolute differences with respect to the specified section. In an exemplary embodiment, the second pattern storage unit 381 is implemented so that the absolute differences between the SADs stored in the first pattern storage unit 361 are consecutively stored in the second pattern storage unit 381.

With reference to the drawings, the operation of the video signal detecting apparatus according to the present invention will be described in greater detail hereinbelow.

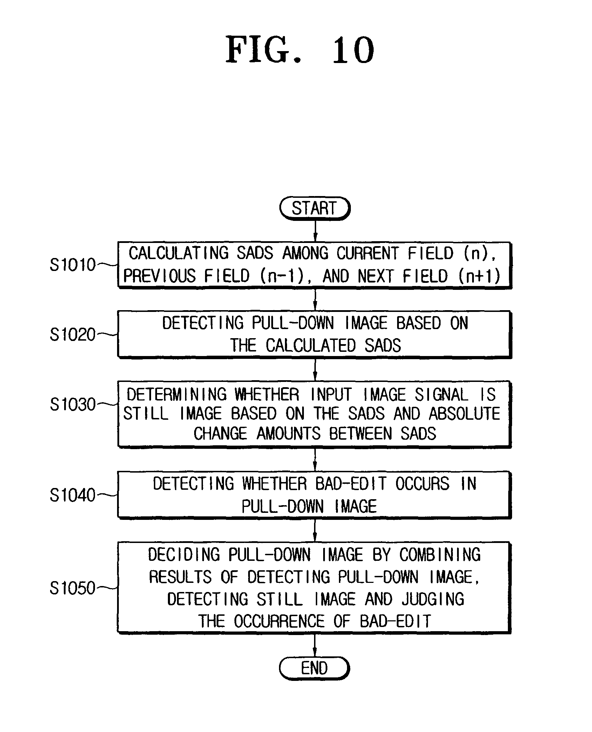

Referring to Figure 10, the SAD calculation unit 100 obtains pixel values of fields stored in the previous field storage unit, the current field storage unit, and the next field storage unit and calculates differences of the pixel values between the fields, i.e., SAD between the previous field (n-1) and the current field (n), SAD between the current field (n) and the next field (n+1), and SAD between the previous field (n-1) and the next field (n+1) (S1010). The pull-down image detection unit 300 detects a pull-down image with respect to an input video signal based on the calculated SADs (S1020). The pull-down image detection process performed by the pull-down image detection unit 300 is divided into a 3:2 pull-down image detection process and a 2:2 pull-down image detection process.

The still image determining unit 393 determines whether the input video signal is a still image based on the calculated SADs and the absolute differences between the SADs (S1030). For example, if it is defined that the difference of pixel values between the previous field (n-1) and the current field (n) is SAD1 and the difference of pixel values between the current field (n) and the next field (n+1) is SAD2, the absolute difference between the SADs is an absolute difference value of pixel values between the SAD1 and SAD2.

The bad-edit detection unit 395 detects whether there occurs a bad-edit in an editing process with respect to the input video signal (S1040). The detection by the bad-edit detection unit 395 will be described in detail later.

The pull-down sequence decision unit 390 decides the video signal as a pull-down image according to the combination of the result of detecting a pull-down image by the 3:2 pull-down main detection unit 310, the 3:2 pull-down sub-detection unit 330, the 2:2 pull-down main detection unit 350, and the 2:2 pull-down sub-detection unit 370 of the pull-down image detection unit 300, the result of detecting a still image by the still image determining unit 393, and the result of detecting the occurrence of the bad-edit by the bad-edit detection unit 395, respectively (S1050). The method of detecting a pull-down image of a video signal performed by the pull-down sequence decision unit 390 will be described later.

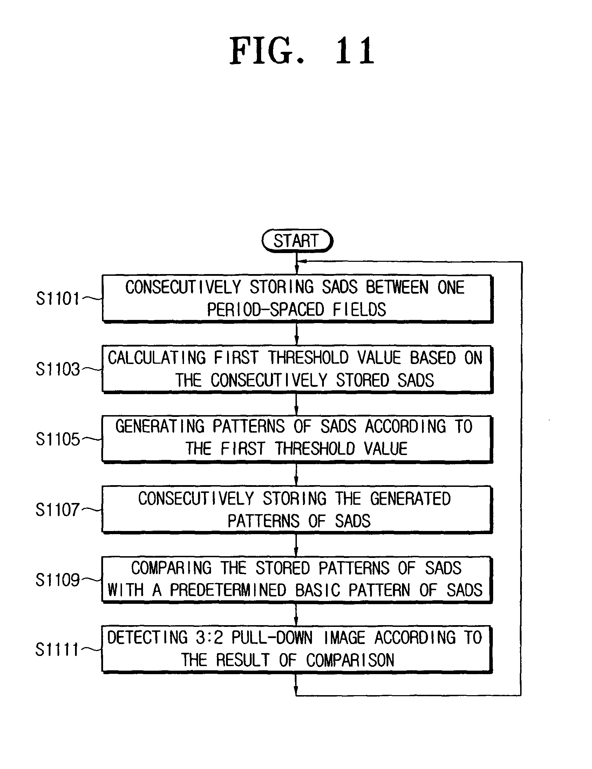

Referring to Figure 11, the SAD calculation unit 313 calculates a SAD between one period-spaced fields, i.e., a SAD between the previous field (n-1) and the next field (n+1). The SAD storage unit 315 consecutively stores the SADs calculated by the SAD calculation unit 313 (S1101). The first threshold value calculation unit 317 calculates a first threshold value by using the SADs consecutively stored in the SAD storage unit 315. The first minimum value detection unit 317a of the first threshold calculation unit 317 detects a minimum value of 5 continuous SADs stored in the SAD storage unit 315. Since a 3:2 pull-down image has one same field for 5 fields, the first minimum value detection unit 317a may be implemented so as to detect the minimum value only once for 5 fields. Also, the first maximum value detection unit 317b of the first threshold value calculation unit 317 detects a maximum value of 5 continuous SADs stored in the SAD storage unit 315. The first threshold value calculation unit 317 calculates the first threshold value based on the minimum value and the maximum value of the SADs detected by the first minimum value detection unit 317a and the first maximum value detection unit 317b, and the calculation of the first threshold value is performed in accordance with the following equation.

[Equation 1]

$$T1 = a \times MIN + b \times MAX$$

Here, T1 denotes the first threshold value of a pull-down image field, a and b are certain values ensuring a + b = 1, MIN denotes the minimum value of the 5 continuous SADs, and MAX denotes the maximum value of the continuous 5 SADs.

The first pattern generation unit 319 generates patterns of the SADs stored in the SAD storage unit 315 according to the first threshold value calculated by the first threshold value calculation unit 317 (step S1105). The first pattern generation unit 319 compares the SAD with the first threshold value calculated by the first threshold value calculation unit 317, and generates '1' if the SAD is larger than the first threshold value. Otherwise, the first pattern generation unit 319 generates '0'.

The first pattern storage unit 321 consecutively stores the patterns of the SADs generated by the first pattern generation unit 309 (S1107). The first pattern comparison unit 323 compares the pattern of the SAD stored in the first pattern storage unit 321 with the predetermined basic pattern of the SAD (step S1109). Here, the basic pattern of the SAD means the basic pattern of the SAD of the 3:2 pull-down image, and may take the form of five possible patterns. The five types of the basic pattern of the SAD are 0111101111, 1011110111, 1101111011, 1110111101, and 1111011110. The 3:2 pull-down main detection unit 310 detects the 3:2 pull-down image according to a result of comparison by the first pattern comparison unit 323 (step S1111). In other words, if the pattern of the SAD stored in the first pattern storage unit 321 is identical to the basic pattern of the SAD, the 3:2 pull-down main detection unit 310 decides the input video signal to be a 3:2 pull-down image. This process of detecting the 3:2 pull-down image is repeatedly performed with respect to the input image signal. In the case that the picture is abruptly changed (for instance with a scene cut), the 3:2 pull-down image is still detected by adaptively changing the threshold value, thus properly cop ing with the changed picture.

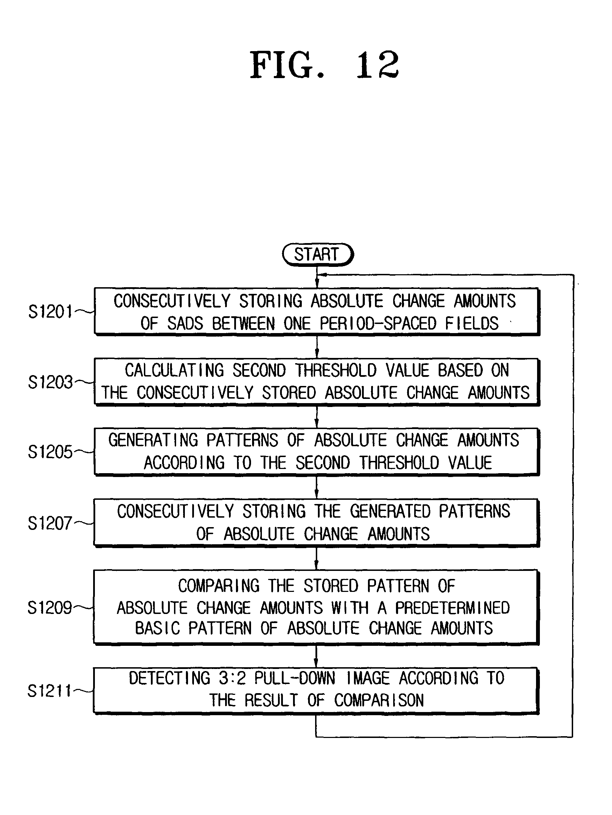

Referring to Figure 12, the absolute difference calculation unit 333 calculates an absolute difference between SADs calculated by the SAD calculation unit 313 of the 3:2 pull-down main detection unit 310 between one period-spaced fields. In other words, if it is defined that the difference of pixel values between the previous field (n-1) and the next field (n+1) is SAD3 and the difference of pixel values between the current field n and the next field (n+2) is SAD4, the absolute difference calculation unit 333 calculates an absolute difference value between SAD3 and SAD4. The absolute difference storage unit 335 consecutively stores the absolute differences calculated by the absolute difference calculation unit 333 (S1201). The second threshold value calculation unit 337 calculates a second threshold value by using the absolute difference stored in the absolute difference storage unit 335 (S1203). The second minimum value detection unit 337a of the second threshold value calculation unit 337 detects a minimum value with respect to 5 continuous absolute differences from the absolute differences stored in the absolute difference storage unit 335. Also, the second threshold value calculation unit 337 detects a maximum value with respect to the 5 continuous absolute differences from the absolute differences stored in the absolute difference storage unit 335. The second threshold value calculation unit 337 calculates a second threshold value based on the minimum value and the maximum value of the absolute differences detected by the second minimum value detection unit 337a and the second maximum value detection unit 337b. The calculation of the second threshold value is performed by the following equation.

[Equation 2]

$$T2 = a' \times MIN' + b' \times MAX'$$

Here, T2 denotes the second threshold value with respect to the field of the 3:2 pull-down image, a' and b' are certain values ensuring a' + b' = 1, MIN' denotes the minimum value of the 5 continuous absolute differences, and MAX' denotes the maximum value of the 5 continuous absolute differences.

The second pattern generation unit 339 generates patterns of the absolute differences stored in the absolute difference storage unit 335 according to the second threshold value calculated by the second threshold value calculation unit 337 (step S1205). In this case, the second pattern generation unit 339 compares the absolute difference with the second threshold value calculated by the second threshold value calculation unit 337, and generates '1' if the absolute difference is larger than the second threshold value. Otherwise, the second pattern generation unit 359 generates '0'.

The second pattern storage unit 341 consecutively stores the patterns of the absolute differences generated by the second pattern generation unit 339 (step S1207). The second pattern comparison unit 343 compares the pattern of the absolute difference stored in the second pattern storage unit 341 with the predetermined basic pattern of the absolute difference (step S1209). The basic pattern of the absolute difference means the basic pattern of the absolute difference of the 3:2 pull-down image, and may take the form of five possible patterns. The five types of the basic pattern of the absolute change amount are 1000110001, 1100011000, 0110001100, 0011000110, and 0001100011. The 3:2 pull-down sub detection unit 330 detects a 3:2 pull-down image according to a result of comparison by the second pattern comparison unit 343. In other words, if the pattern of the absolute difference stored in the second pattern storage unit 341 is identical to the basic pattern, the 3:2 pull-down detection unit 330 decides that the input image signal is a 3:2 pull-down image.

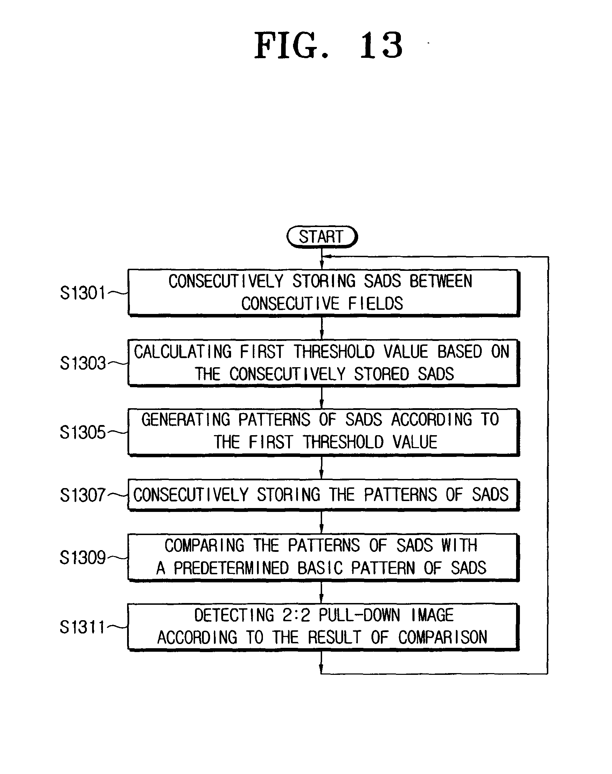

Referring to Figure 13, the SAD calculation unit 353 calculates SADs between consecutive fields, i.e., a SAD between the previous field (n-1) and the current field (n) and a SAD between the current field (n) and the next field (n+1). The SAD storage unit 355 consecutively stores the SADs calculated by the SAD calculation unit 353 (S1301). The first threshold value calculation unit 357 calculates a first threshold value by using the SADs consecutively stored in the SAD storage unit 355 (S1303). In this case, the first minimum value detection unit 357a of the first threshold value calculation unit 357 detects a minimum value of the SADs with respect to a specified section of the SADs stored in the SAD storage unit 355. The first maximum value detection unit 357b of the first threshold value calculation unit 357 detect a maximum value of the SADs with respect to the specified section of the SADs stored in the SAD storage unit 355. Since it is generally the case that the SAD between the fields of the same frame has a small value, the first minimum value detection unit 357a may be implemented so as to detect the minimum value by searching for only the SAD between the fields of the same frame. Also, since it is generally the case that the SAD between the fields of the adjacent frames is changed (which may mean they are large), the first maximum value detection unit 357b may be implemented so as to detect the maximum value by searching for only the SAD between the fields of the adjacent frames.

The first threshold value calculation unit 357 calculates the first threshold value based on the minimum value and the maximum value of the SADs detected by the first minimum value detection unit 357a and the first maximum value detection unit 357b. The calculation of the first threshold value is performed by the following equation.

[Equation 3]

$$T3 = c \times MIN + d \times MAX$$

Here, T3 denotes the first threshold value with respect to the field of the 2:2 pull-down image, c and d are certain values ensuring c + d = 1, MIN denotes the minimum value of the SADs in a specified section, and MAX denotes the maximum value of the SADs in the specified section.

The first pattern generation unit 359 generates patterns of the SADs stored in the SAD storage unit 355 according to the first threshold value calculated by the first threshold value calculation unit 357 (step S1305). In this case, the first pattern generation unit 359 compares the SAD with the first threshold value calculated by the first threshold value calculation unit 357, and generates '1' if the SAD is larger than the first threshold value. Otherwise, the first pattern generation unit 309 generates '0'.

The first pattern storage unit 361 consecutively stores the patterns of the SADs generated by the first pattern generation unit 359 (step S1307). The first pattern comparison unit 363 compares the pattern of the SAD stored in the first pattern storage unit 361 with the predetermined basic pattern of the SAD (step S1309). Here, the basic pattern of the SAD means the basic pattern of the SAD of the 2:2 pull-down image, and may take the form of two combinations of basic pattern. The two types of the basic pattern of the SAD are 0101010101 and 1010101010. The 2:2 pull-down main detection unit 350 detects the 2:2 pull-down image according to a result of comparison by the first pattern comparison unit 363 (step S1311). In other words, if the pattern of the SAD stored in the first pattern storage unit 361 is identical to the basic pattern of the SAD, the 2:2 pull-down main detection unit 350 decides that the input image signal is a 2:2 pull-down image. The process of detecting the 2:2 pull-down image is repeatedly performed with respect to the input image signal. In the case that the picture is abruptly changed (for example, a scene change), the 2:2 pull-down image is detected by adaptively changing the threshold value. This means that it can properly cope with the changed picture.

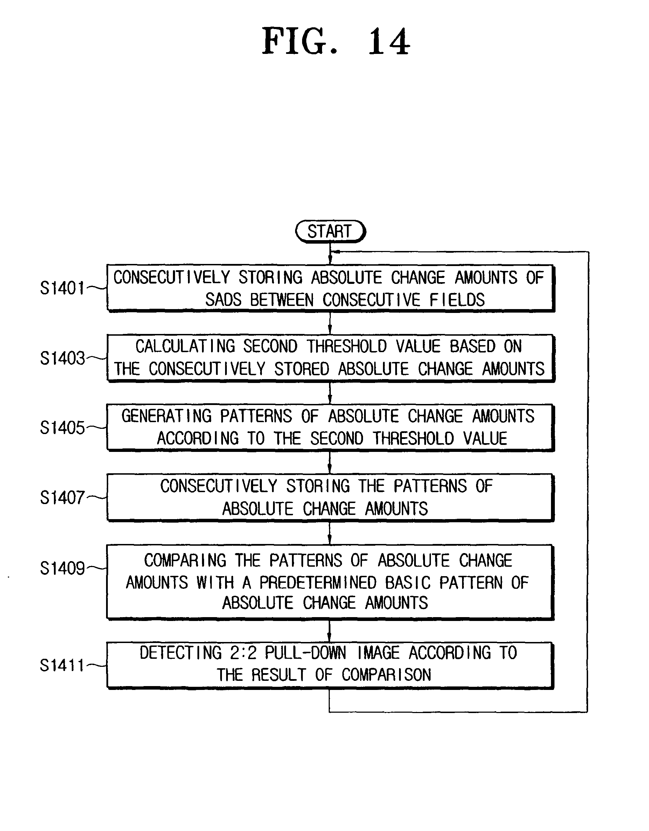

Referring to Figure 14, the absolute difference calculation unit 373 of the 2:2 pull-down sub-detection unit 370 calculates the absolute difference between the SADs calculated by the SAD calculation unit of the 2:2 pull-down main detection unit 350. That is, the absolute difference calculation unit 373 calculates an absolute difference between SADs calculated between the previous field (n-1) and the current field (n) and between the current field (n) and the next field (n+1). The absolute difference storage unit 375 consecutively stores the absolute differences calculated by the absolute difference calculation unit 373 (S1401). The second threshold value calculation unit 377 calculates a second threshold value by using the absolute differences consecutively stored in the absolute difference storage unit 375 (S1403). In this case, the second minimum value detection unit 377a detects the minimum value of the absolute differences with respect to a specified section of the absolute differences stored in the absolute difference storage unit 375. Also, the second maximum value detection unit 377b of the second threshold value calculation unit 377 detects the maximum value of the absolute differences with respect to the specified section of the absolute differences stored in the absolute difference storage unit 375.

The second threshold value calculation unit 377 calculates the second threshold value based on the minimum value and the maximum value of the absolute differences detected by the second minimum value detection unit 377a and the second maximum value detection unit 377b. The calculation of the second threshold value is in accordance with the following equation.

[Equation 4]

$$T4 = c' \times MIN' + d' \times MAX'$$

Here, T4 denotes the second threshold value with respect to the field of the 2:2 pull-down image, c' and d' are certain values ensuring c' + d' = 1, MIN' denotes the minimum value of the absolute differences in a specified section, and MAX' denotes the maximum value of the absolute differences in the specified section.

The second pattern generation unit 379 generates patterns of the absolute differences stored in the absolute difference storage unit 375 according to the second threshold value calculated by the second threshold value calculation unit 377 (step S1405). In this case, the second pattern generation unit 379 compares the absolute difference with the second threshold value calculated by the second threshold value calculation unit 377, and generates '1' if the absolute difference is larger than the second threshold value. Otherwise, the second pattern generation unit 359 generates '0'. In the drawing, '+' is marked instead of '1', and '-' instead of '0'.

The second pattern storage unit 381 consecutively stores the patterns of the absolute differences generated by the second pattern generation unit 379 (step S1407). The second pattern comparison unit 383 compares the pattern of the absolute difference stored in the second pattern storage unit 381 with the predetermined basic pattern of the absolute difference (step S1409). Here, the basic pattern of the absolute difference means the basic pattern of the absolute difference of the 2:2 pull-down image, and may take the form of two combinations. The two types of the basic pattern of the absolute change amount are -+-+-+-+ and +-+-+-+-.

The sub-detection unit 370 detects the 2:2 pull-down image according to a result of comparison by the second pattern comparison unit 383 (step S1411). In other words, if the pattern of the absolute difference stored in the second pattern storage unit 381 is identical to the basic pattern of the absolute difference, the 2:2 pull-down sub-detection unit 370 decides that the input image signal is the 2:2 pull-down image.

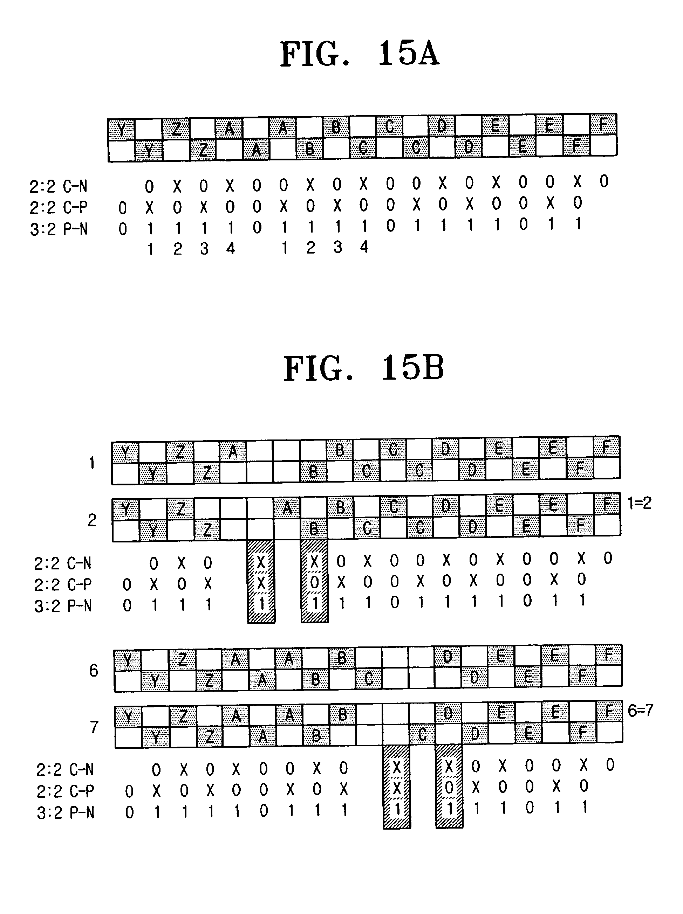

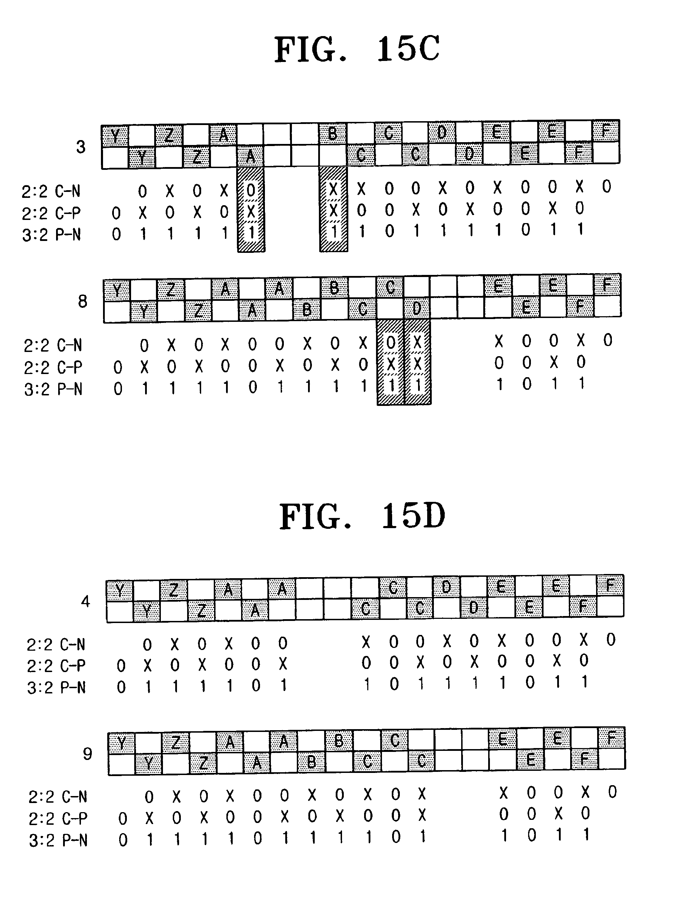

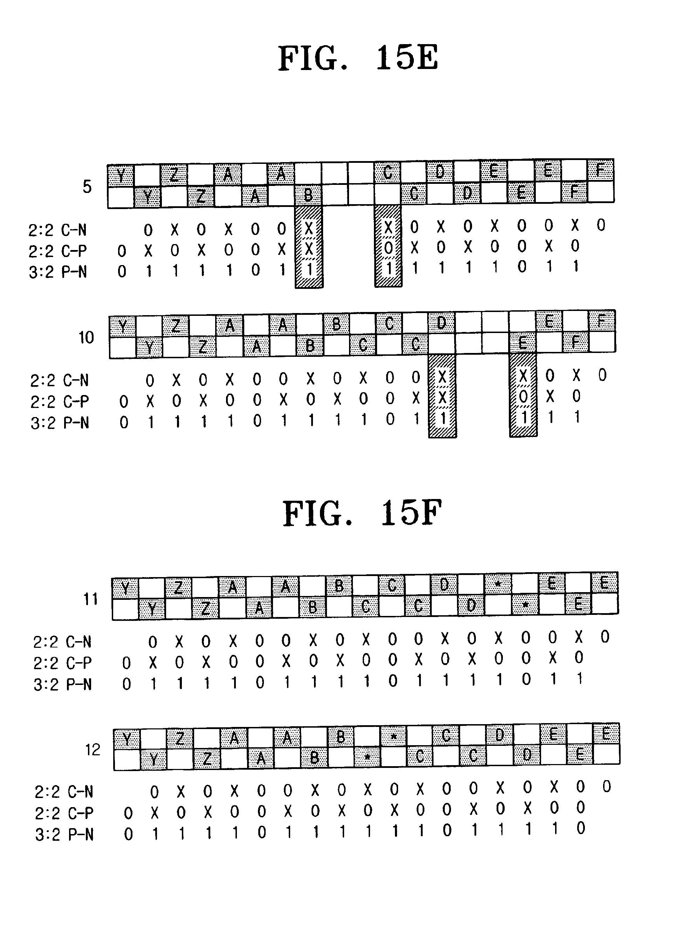

Figures 15A to 15F show examples of bad-edit occurring in the 3:2 pull-down image, to explain a bad-edit detection method of the bad-edit detection unit of Figure 3.

If a normal image signal of 3:2 pull-down image, i.e., having no bad-edit, is input, the SAD in the 3:2 pull-down main detection unit 310 appears in the pattern of 0111101111. Meanwhile, the SAD in the 2:2 pull-down main detection unit 350 appears in the patterns of OXOXOXOXOX or XOXOXOXOXO. The pattern of SAD in the 3:2 pull-down main detection unit 310 and the pattern of SAD in the 2:2 pull-down main detection unit 350 are shown differently for the convenience of explanation.

If there occurs a bad-edit in which a field is omitted from the frame A, the pattern of SAD in the 3:2 pull-down main detection unit 310 becomes 1. Also, all of the patterns of the SADs in the 2:2 pull-down main detection unit 350 become 'x'. In other words, the pattern of SAD between the current field C and the next field N and the pattern of SAD between the current field C and the previous field P all become 'x'. With respect to the bottom field of the frame B, the pattern of SAD between the current field C and the next field N becomes 'x' and the pattern of SAD of the current field C and the previous field P becomes 'o', while the pattern of SAD between the previous field P and the next field N becomes 1. These patterns deviate from the basic pattern of the SAD, and this means that there occurs a bad-edit in the 3:2 pull-down image. Several examples of the bad-edit occurrences are illustrated Figures 15B to 15F.

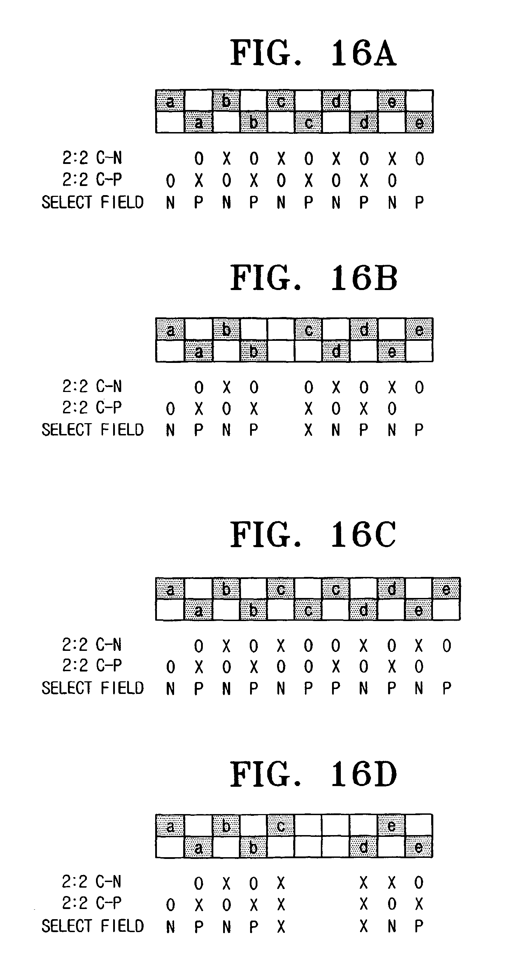

Referring to Figure 16, in the normal 2:2 pull-down image signal without the bad-edit, the pattern of SAD between the current field C and the next field N and the pattern of SAD between the current field C and the previous field N appear alternately (see Figure 16A).

If there occurs a bad-edit in which the bottom field is omitted from the frame C, the pattern of SAD between the current field C and the next field N and the pattern of SAD between the current field C and the previous field P all become 'x'. These patterns deviate from the basic pattern of the SAD of the 2:2 pull-down image, and this means that there occurs a bad-edit in the 2:2 pull-down image. Several examples of the bad-edit occurrences are illustrated in Figures 16B to 16D.

As described above, the bad-edit detection unit 395 detects whether a bad-edit has occurred in the 3:2 pull-down image or the 2:2 pull-down image by searching the patterns of SADs and the patterns of the absolute differences, which are detected by the 3:2 pull-down main detection unit 310, 3:2 pull-down sub-detection unit 330, 2:2 pull-down main detection unit 350 and the 2:2 pull-down sub-detection unit 370, respectively.

The still image determining unit 393 determines whether the input image signal is a still image based on the SAD and the absolute difference. For example, if the presently calculated SAD and the SAD calculated one field before are very small in comparison to the previous SAD and the absolute difference between the presently calculated SAD and the SAD calculated one field before is very small in comparison to the previous absolute difference, the present input image is close to a still image. The pattern of the SAD and the pattern of the absolute difference stored in the first pattern storage unit 321 and the second pattern storage unit 381 are as follows.

$$SAD\_pattern[n-1] = 0$$

$$SAD\_pattern[n] = 0$$

$$|\Delta SAD|\_pattern[n-1] = 0$$

The decision unit 397 decides whether the input image signal is the 3:2 pull-down sequence or the 2:2 pull-down sequence by combining results of detecting the 3:2 pull-down image by the 3:2 pull-down main detection unit 310, the 3:2 pull-down sub-detection unit 330, the 2:2 pull-down main detection unit 350, and the 2:2 pull-down sub-detection unit 370, a result of determining whether the image signal is the still image by the still image determining unit 390, and a result of detecting whether there occurs a bad-edit by the bad-edit detection unit 395. Several examples of deciding the pull-down sequence by the decision unit 390 are shown in Table 1 below.

[Table 1]

| Decision | Previous Flag | Still Flag | Bad-edit Flag | 3:2 Main | 3:2 Sub | 2:2 Main | 2:2 Sub | Count |
|---|---|---|---|---|---|---|---|---|
| 0 | 0 | X | X | 1 | 1 | X | X | count < ε |
| 1 | X | X | X | 1 | 1 | X | X | count = ε |
| 0 | 0 | X | X | 1 | 0 | 1 | 0 | X |
| 1 | 1 | X | X | 1 | 0 | 1 | 0 | X |
| 1 | 1 | 0 | X | 0 | 1 | 1 | 1 | X |
| 1 | 1 | 0 | 1 | 0 | 0 | 0 | 0 | X |

If it is determined that the image signal is the 3:2 pull-down image by the 3:2 pull-down main detection unit 310 and the 3:2 pull-down sub-detection unit 330, and the 3:2 pull-down image does not continue for a predetermined time, the decision unit 397 decides that the image signal is not actually the pull-down sequence irrespective of the previous flag, the still flag, and the bad-edit flag. However, if the 3:2 pull-down image continues for a predetermined time, the decision unit 397 decides the image signal to be the 3:2 pull-down sequence in accordance with the result of detecting the 3:2 pull-down image by the 3:2 pull-down main detection unit 310 and the 3:2 pull-down sub-detection unit 330.

If the 3:2 pull-down main detection unit 310 and the 2:2 pull-down main-detection unit 350 detect the 3:2 pull-down image and the 2:2 pull-down image respectively, where the previous flag is "0', the decision unit 397 will decide the image signal to be the pull-down image whilst maintaining the previous flag.

If the 3:2 pull-down main detection unit 310, the 3:2 pull-down sub-detection unit 330, the 2:2 pull-down main detection unit 350, and the 2:2 pull-down sub-detection unit 370 do not detect the pull-down image and the bad-edit detection unit 395 detects the bad-edit where the previous flag is "1", the decision unit 397 decides the image signal to be the pull-down sequence and maintains the previous flag. Here, the fact that the previous flag is "0" means that the 3:2 pull-down image is not decided with respect to the previous image signal.

Consequently, the image signal detecting apparatus according to the present invention can accurately detect the pull-down image by detecting the 3:2 pull-down image and the 2:2 pull-down image using the SAD and the absolute change amount. Also, the apparatus can prevent the displayed image from appearing unnatural by reducing the frequency of on/off operations of the pull-down image flag.

Also, as described above, since the image signal detecting apparatus detects the bad-edit by the bad-edit detection unit, and detects the image signal according to the detect result, compensation with respect to the image signal is achieved.

**Claims**

1. A method of detecting a bad-edit portion of a television signal, comprising

   generating a difference signal indicative of a difference between two fields;
   generating an absolute difference signal indicative of the magnitude of the difference between two difference signals;
   generating a telecine portion indication signal in accordance with the difference signal; and
   generating a bad-edit indication signal indicative of a bad-edit in the frame in accordance with the difference signal and
   in accordance with the absolute difference signal.

2. A method according to claim 1, comprising:

   comparing a pattern of generated absolute difference signals over a period with at least one predetermined pattern; and
   generating the telecine portion indication signal in accordance with the comparison of the pattern.

3. A method according to either one of claims 1 or 2, comprising:

   comparing a pattern of generated difference signals over a period with at least one predetermined pattern; and
   generating the telecine portion indication signal in accordance with the comparison of the pattern.

4. An apparatus for detecting a bad-edit portion of a television signal, comprising

   means (300) for generating a difference signal indicative of a difference between two fields;
   means (370) for generating an absolute difference signal indicative of the magnitude of the difference between two difference signals;
   means (397) for generating a telecine portion indication signal in accordance with the difference signal;
   means (395) for generating a bad-edit indication signal indicative of a bad-edit in the frame in accordance with the difference signal and
   in accordance with the absolute difference signal.

5. An apparatus according to claim do comprising:

   means (343) for comparing a pattern of generated absolute difference signals over a period with at least one predetermined pattern; and
   means (397) for generating the telecine portion indication signal in accordance with the comparison of the pattern.

6. An apparatus according to any either one of claims 4 or 5, comprising:

   means (323) for comparing a pattern of generated difference signals over a period with at least one predetermined pattern; and
   means (397) for generating the telecine portion indication signal in accordance with the comparison of the pattern.

7. A television comprising:

   display means for displaying a picture; and
   an apparatus according to any one of claims 4, 5 or 6.

8. An apparatus according to claim 4 comprising:

   a still image determining unit (393) for determining whether the television signal is a still image or not based on the difference signal and absolute difference signal; wherein the result of determining whether the television signal is a telecine portion is based on the telecine portion indication signal, the output of the still image determining unit (393) and the bad-edit indication signal; and wherein the two fields are a current field (n), a previous field (n-1), and a next field (n+1) with respect to consecutively input television signals with 'n' being n=1, 2, 3,...;

9.  An apparatus according to claim 8, wherein the means (300) for generating a difference signal comprises:

    a 3:2 pull-down image detection unit (310) for detecting a 3:2 pull-down image; and
    a 2:2 pull-down image detection unit (330) for detecting a 2:2 pull-down image.

10. An apparatus according to claim 9, wherein the 3:2 pull-down image detection unit (310) comprises:

    a main detection unit (310) for detecting the 3:2 pull-down image based on the difference signal, which is a summed absolute difference signal between fields spaced from each other by 1 period; and
    a sub detection unit (330) for detecting the 3:2 pull-down image based on an absolute difference signal derived with respect to the summed absolute difference between the 1 period-spaced fields.

11. An apparatus according to claim 10, wherein the 3:2 pull-down image detection unit (310) detects the 3:2 pull-down image by generating patterns of the difference signal between the 1 period-spaced fields and patterns of the absolute difference signal, and comparing the patterns of the difference signals and the patterns of the absolute difference signals with a basic pattern of the 3:2 pull-down image.

12. An apparatus according to claim 9, wherein the 2:2 pull-down image detection unit (300) comprises:

    a main detection unit (350) for detecting the 2:2 pull-down image based on the summed difference signal between consecutive fields; and
    a sub-detection unit (370) for detecting the 2:2 pull-down image based on an absolute difference signal.

13. An apparatus according to claim 12, wherein the 2:2 pull-down image detection unit (350) detects the 2:2 pull-down image by generating patterns of the difference signals between the consecutive fields and patterns of the absolute difference signals, and comparing the patterns of the difference signals and the patterns of the absolute difference signals with a basic pattern of the 2:2 pull-down image.

14. A method according to claim 1 comprising:

    judging whether the input image signal is a still image based on the difference signals, which are summed absolute differences and the absolute difference signals; and
    deciding whether the television signal is the telecine portion or not on the basis of the telecine portion indication signal, the result of judging whether the input image signal is a still image and the bad-edit indication signal

15. A method according to claim 14, wherein the telecine portion detection step comprises:

    a 3:2 pull-down image detection step of detecting a 3:2 pull-down image; and
    a 2:2 pull-down image detection step of detecting a 2:2 pull-down image.

16. A method according to claim 15, wherein the 3:2 pull-down image detection step comprises:

    a main detection step of detecting the 3:2 pull-down image based on the difference signal generated in accordance with the summed absolute difference between fields spaced from each other by 1 period; and
    a sub-detection step of detecting the 3:2 pull-down image based on the absolute difference signal generated in accordance with the summed absolute differences between the 1 period-spaced fields.

17. A method according to claim 15, wherein the 2:2 pull-down image detection step comprises:

    a main detection step of detecting the 2:2 pull-down image based on the difference signal generated in accordance with the summed absolute difference between consecutive fields; and
    a sub-detection step of detecting the 2:2 pull-down image based on the absolute difference signal generated in accordance with the summed absolute difference between the difference signals.

**18.** A method according to claim 16, wherein the main detection step comprises:

consecutively storing the difference signals between the 1 period-spaced fields;
calculating a first threshold value using the consecutively stored difference signals;
generating patterns of the stored difference signals according to the calculated first threshold value;
consecutively storing the patterns of the difference signals; and
comparing the stored patterns of the difference signals with a predetermined basic pattern of the difference signal, and
the main detection step detects the 3:2 pull-down image according to the result of the comparison by the difference signal pattern comparison step.

**19.** A method according to claim 18, wherein the sub-detection step comprises:

consecutively storing absolute difference signals generated in accordance with the difference signals between the 1 period-spaced fields;
calculating a second threshold value using the consecutively stored absolute difference signals;
generating patterns of the absolute difference signals according to the calculated second threshold value;
consecutively storing the patterns of the absolute difference signals; and
comparing the patterns of the stored absolute difference signals with a predetermined basic pattern of the absolute difference signals,

wherein the sub detection step detects the 3:2 pull-down image according to the result of the comparison in the absolute difference signal pattern comparison step.

**20.** A method according to claim 17, wherein the main detection step comprises:

consecutively storing the difference signals between consecutive fields;
calculating a first threshold value using the consecutively stored difference signals;
generating patterns of the difference signals according to the calculated first threshold value;
consecutively storing the patterns of the difference signals; and
comparing the stored patterns of the difference signals with a predetermined basic pattern of the difference signal,

wherein the main detection step detects the 2:2 pull-down image according to the result of the comparison by the difference signal pattern comparison step.

**21.** A method according to claim 17, wherein the sub-detection step comprises:

consecutively storing absolute difference signals;
calculating a second threshold value using the consecutively-stored absolute difference signals;
generating patterns of the absolute difference signals according to the calculated second threshold value;
consecutively storing the patterns of the absolute difference signals; and
comparing the patterns of the stored absolute difference signals with a predetermined basic pattern of the absolute difference signals,

wherein the sub-detection step detects the 2:2 pull-down image according to the result of the comparison by the absolute difference signal pattern comparison step.

**Patentansprüche**

**1.** Verfahren zum Erkennen eines Editierfehleranteils eines Fernsehsignals, umfassend:

Erzeugen eines Differenzsignals, das eine Differenz zwischen zwei Feldern anzeigt;
Erzeugen eines absoluten Differenzsignals, das die Größenordnung der Differenz zwischen zwei Differenzsignalen anzeigt;
Erzeugen eines Filmabtastanteil-Indikatorsignals entsprechend dem Differenzsignal; und
Erzeugen eines Editierfehler-Indikatorsignals, das einen Editierfehler in dem Vollbild anzeigt, entsprechend dem Differenzsignal und entsprechend dem absoluten Differenzsignal.

**2.** Verfahren nach Anspruch 1, umfassend:

Vergleichen eines Musters erzeugter absoluter Differenzsignale über einen Zeitraum mit wenigstens einem vorgegebenen Muster; und
Erzeugen des Filmabtastanteil-Indikatorsignals entsprechend dem Vergleich des Musters.

**3.** Verfahren nach einem der Ansprüche 1 oder 2, umfassend:

Vergleichen eines Musters erzeugter Differenzsignale über einen Zeitraum mit wenigstens einem vorgegebenen Muster; und
Erzeugen des Filmabtastanteil-Indikatorsignals entsprechend dem Vergleich des Musters.

**4.** Vorrichtung zum Erkennen eines Editierfehleranteils eines Fernsehsignals, umfassend:

ein Mittel (300) zum Erzeugen eines Differenzsignals, das eine Differenz zwischen zwei Feldern anzeigt;
ein Mittel (370) zum Erzeugen eines absoluten Differenzsignals, das die Größenordnung der Differenz zwischen zwei Differenzsignalen anzeigt;
ein Mittel (397) zum Erzeugen eines Filmabtastanteil-Indikatorsignals entsprechend dem Differenzsignal; und
ein Mittel (395) zum Erzeugen eines Editierfehler-Indikatorsignals, das einen Editierfehler in dem Vollbild anzeigt, entsprechend dem Differenzsignal und entsprechend dem absoluten Differenzsignal.

**5.** Vorrichtung nach Anspruch 4, umfassend:

ein Mittel (343) zum Vergleichen eines Musters erzeugter absoluter Differenzsignale über einen Zeitraum mit wenigstens einem vorgegebenen Muster; und
ein Mittel (397) zum Erzeugen des Filmabtastanteil-Indikatorsignals entsprechend dem Vergleich des Musters.

**6.** Vorrichtung nach einem der Ansprüche 4 oder 5, umfassend:

ein Mittel (323) zum Vergleichen eines Musters erzeugter Differenzsignale über einen Zeitraum mit wenigstens einem vorgegebenen Muster; und
ein Mittel (397) zum Erzeugen des Filmabtastanteil-Indikatorsignals entsprechend dem Vergleich des Musters.

**7.** Fernsehapparat, umfassend:

ein Anzeigemittel zum Anzeigen eines Bildes; und
eine Vorrichtung nach einem der Ansprüche 4, 5 oder 6.

**8.** Vorrichtung nach Anspruch 4, umfassend:

eine Standbildbestimmungseinheit (393) zum Bestimmen, ob das Fernsehsignal ein Standbild ist oder nicht, anhand des Differenzsignals und des absoluten Differenzsignals; wobei sich das Ergebnis der Bestimmung, ob das Fernsehsignal ein Filmabtastanteil ist, auf das Filmabtastanteil-Indikatorsignal, das Ausgangssignal der Standbildbestimmungseinheit (393) und das Editierfehler-Indikatorsignal stützt; und

wobei die beiden Felder ein aktuelles Feld (n), ein vorheriges Feld (n-1) und ein nächstes Feld (n+1) relativ zu aufeinanderfolgenden Fernseh-Eingangssignalen sind, wobei "n" n = 1, 2,3 ..., ist.

**9.** Vorrichtung nach Anspruch 8, wobei das Mittel (300) zum Erzeugen eines Differenzsignals umfasst:

eine 3:2-Filmtransportbilderkennungseinheit (310) zum Erkennen eines 3:2-Filmtransportbildes; und
eine 2:2-Filmtransportbilderkennungseinheit (330) zum Erkennen eines 2:2-Filmtransportbildes.

**10.** Vorrichtung nach Anspruch 9, wobei die 3:2-Filmtransportbilderkennungseinheit (310) umfasst:

eine Haupterkennungseinheit (310) zum Erkennen des 3:2-Filmtransportbildes anhand des Differenzsignals, das ein summiertes absolutes Differenzsignal zwischen Feldern ist, die um eine Fortschaltzeit von 1 voneinander beabstandet sind; und

eine Nebenerkennungseinheit (330) zum Erkennen des 3:2-Filmtransportbildes anhand eines absoluten Differenzsignals, das anhand der summierten absoluten Differenz zwischen den Feldern, die um eine Fortschaltzeit von 1 voneinander beabstandet sind, abgeleitet wird.

**11.** Vorrichtung nach Anspruch 10, wobei die 3:2-Filmtransportbilderkennungseinheit (310) das 3:2-Filmtransportbild erkennt, indem Muster des Differenzsignals zwischen den Feldern, die um eine Fortschaltzeit von 1 voneinander beabstandet sind, und Muster des absoluten Differenzsignals erzeugt werden und indem die Muster der Differenzsignale und die Muster der absoluten Differenzsignale mit einem Grundmuster des 3:2-Filmtransportbildes verglichen werden.

**12.** Vorrichtung nach Anspruch 9, wobei die 2:2-Filmtransportbilderkennungseinheit (300) umfasst:

eine Haupterkennungseinheit (350) zum Erkennen des 2:2-Filmtransportbildes anhand des summierten Differenzsignals zwischen aufeinanderfolgenden Feldern; und
eine Nebenerkennungseinheit (370) zum Erkennen des 2:2-Filmtransportbildes anhand eines absoluten Differenzsignals.

**13.** Vorrichtung nach Anspruch 12, wobei die 2:2-Filmtransportbilderkennungseinheit (350) das 2:2-Filmtransportbild erkennt, indem Muster der Differenzsignale zwischen den aufeinanderfolgenden Feldern und Muster der absoluten Differenzsignale erzeugt werden und indem die Muster der Differenzsignale und die Muster der absoluten Differenzsignale mit einem Grundmuster des 2:2-Filmtransportbildes verglichen werden.

**14.** Verfahren nach Anspruch 1, umfassend:

das Beurteilen, ob das Bild-Eingangssignal ein Standbild ist, anhand der Differenzsignale, die summierte absolute Differenzen sind, und der absoluten Differenzsignale; und
das Entscheiden, ob das Fernsehsignal der Filmabtastanteil ist oder nicht, anhand des Filmabtastanteil-Indikatorsignals, des Ergebnisses der Beurteilung, ob das Bild-Eingangssignal ein Standbild ist, und des Editierfehler-Indikatorsignals.

**15.** Verfahren nach Anspruch 14, wobei der Filmabtastanteilerkennungsschritt umfasst:

einen 3:2-Filmtransportbilderkennungsschritt zum Erkennen eines 3:2-Filmtransportbildes; und
einen 2:2-Filmtransportbilderkennungsschritt zum Erkennen eines 2:2-Filmtransportbildes.

**16.** Verfahren nach Anspruch 15, wobei der 3:2-Filmtransportbilderkennungsschritt umfasst:

einen Haupterkennungsschritt zum Erkennen des 3:2-Filmtransportbildes anhand des Differenzsignals, das gemäß der summierten absoluten Differenz zwischen Feldern, die um eine Fortschaltzeit von 1 voneinander beabstandet sind, erzeugt wird; und
einen Nebenerkennungsschritt zum Erkennen des 3:2-Filmtransportbildes anhand des absoluten Differenzsignals, das gemäß den summierten absoluten Differenzen zwischen den Feldern, die um eine Fortschaltzeit von 1 voneinander beabstandet sind, erzeugt wird.

**17.** Verfahren nach Anspruch 15, wobei der 2:2-Filmtransportbilderkennungsschritt umfasst:

einen Haupterkennungsschritt zum Erkennen des 2:2-Filmtransportbildes anhand des Differenzsignals, das gemäß der summierten absoluten Differenz zwischen aufeinanderfolgenden Feldern erzeugt wird; und
einen Nebenerkennungsschritt zum Erkennen des 2:2-Filmtransportbildes anhand des absoluten Differenzsignals, das gemäß der summierten absoluten Differenz zwischen den Differenzsignalen erzeugt wird.

**18.** Verfahren nach Anspruch 16, wobei der Haupterkennungsschritt umfasst:

aufeinanderfolgendes Speichern der Differenzsignale zwischen den Feldern, die um eine Fortschaltzeit von 1 voneinander beabstandet sind;
Berechnen eines ersten Schwellenwertes unter Verwendung der aufeinanderfolgend gespeicherten Differenzsignale;
Erzeugen von Mustern der gespeicherten Differenzsignale gemäß dem berechneten ersten Schwellenwert;

aufeinanderfolgendes Speichern der Muster der Differenzsignale; und

Vergleichen der gespeicherten Muster der Differenzsignale mit einem vorgegebenen Grundmuster des Differenzsignals;

wobei der Haupterkennungsschritt das 3:2-Filmtransportbild gemäß dem Ergebnis des Vergleichs durch den Differenzsignalmustervergleichsschritt erkennt.

**19.** Verfahren nach Anspruch 18, wobei der Nebenerkennungsschritt umfasst:

aufeinanderfolgendes Speichern absoluter Differenzsignale, die gemäß den Differenzsignalen zwischen den Feldern, die um eine Fortschaltzeit von 1 voneinander beabstandet sind, erzeugt werden;

Berechnen eines zweiten Schwellenwertes unter Verwendung der aufeinanderfolgend gespeicherten absoluten Differenzsignale;

Erzeugen von Mustern der absoluten Differenzsignale gemäß dem berechneten zweiten Schwellenwert;

aufeinanderfolgendes Speichern der Muster der absoluten Differenzsignale; und

Vergleichen der Muster der gespeicherten absoluten Differenzsignale mit einem vorgegebenen Grundmuster der absoluten Differenzsignale;

wobei der Nebenerkennungsschritt das 3:2-Filmtransportbild gemäß dem Ergebnis des Vergleichs in dem Schritt des Vergleichens der Muster der absoluten Differenzsignale erkennt.

**20.** Verfahren nach Anspruch 17, wobei der Haupterkennungsschritt umfasst:

aufeinanderfolgendes Speichern der Differenzsignale zwischen aufeinanderfolgenden Feldern;

Berechnen eines ersten Schwellenwertes unter Verwendung der aufeinanderfolgend gespeicherten Differenzsignale;

Erzeugen von Mustern der Differenzsignale gemäß dem berechneten ersten Schwellenwert;

aufeinanderfolgendes Speichern der Muster der Differenzsignale; und

Vergleichen der gespeicherten Muster der Differenzsignale mit einem vorgegebenen Grundmuster des Differenzsignals;

wobei der Haupterkennungsschritt das 2:2-Filmtransportbild gemäß dem Ergebnis des Vergleichs durch den Differenzsignalmustervergleichsschritt erkennt.

**21.** Verfahren nach Anspruch 17, wobei der Nebenerkennungsschritt umfasst:

aufeinanderfolgendes Speichern absoluter Differenzsignale;

Berechnen eines zweiten Schwellenwertes unter Verwendung der aufeinanderfolgend gespeicherten absoluten Differenzsignale;

Erzeugen von Mustern der absoluten Differenzsignale gemäß dem berechneten zweiten Schwellenwert;

aufeinanderfolgendes Speichern der Muster der absoluten Differenzsignale; und

Vergleichen der Muster der gespeicherten absoluten Differenzsignale mit einem vorgegebenen Grundmuster der absoluten Differenzsignale;

wobei der Nebenerkennungsschritt das 2:2-Filmtransportbild gemäß dem Ergebnis des Vergleichs durch den Schritt des Vergleichens der Muster der absoluten Differenzsignale erkennt.

## Revendications

**1.** Procédé pour détecter une partie ayant un défaut d'édition (ou *bad-edit*) d'un signal de télévision, consistant à :

générer un signal différentiel, indiquant une différence entre deux trames ;

générer un signal différentiel absolu indiquant l'amplitude de la différence entre deux signaux différentiels ;

générer un signal d'indication de partie convertie en télécinéma, en fonction du signal différentiel ; et

générer un signal indicatif d'un défaut d'édition, indiquant un défaut d'édition dans l'image, en fonction du signal différentiel et en fonction du signal différentiel absolu.

**EP 1 501 298 B1**

**2.** Procédé selon la revendication 1, consistant à :

comparer un motif de signaux différentiels absolus générés sur une période, avec au moins un motif prédéterminé ; et
générer le signal d'indication de partie convertie en télécinéma, en fonction de la comparaison du motif.

**3.** Procédé selon l'une ou l'autre des revendications 1 et 2, consistant à :

comparer un motif de signaux différentiels générés sur une période, avec au moins un motif prédéterminé ; et
générer le signal d'indication de partie convertie en télécinéma, en fonction de la comparaison du motif.

**4.** Appareil pour détecter une partie avec un défaut d'édition d'un signal de télévision, comprenant :

un moyen (300) pour générer un signal différentiel, indiquant une différence entre deux trames ;
un moyen (370) pour générer un signal différentiel absolu, indiquant l'amplitude de la différence entre deux signaux différentiels ;
un moyen (397) pour générer un signal d'indication de partie convertie en télécinéma, en fonction du signal différentiel ; et
un moyen (395) pour générer un signal indicatif d'un défaut d'édition, indiquant un défaut d'édition dans l'image, en fonction du signal différentiel et en fonction du signal différentiel absolu.

**5.** Appareil selon la revendication 4, comprenant :

un moyen (343) pour comparer un motif de signaux différentiels absolus générés sur une période, avec au moins un motif prédéterminé ; et
un moyen (397) pour générer le signal d'indication de partie convertie en télécinéma, en fonction de la comparaison du motif.

**6.** Appareil selon l'une ou l'autre des revendications 4 et 5, comprenant :

un moyen (323) pour comparer un motif de signaux différentiels générés sur une période, avec au moins un motif prédéterminé ; et
un moyen (397) pour générer le signal d'indication de partie convertie en télécinéma, en fonction de la comparaison du motif.

**7.** Télévision comprenant :

un moyen d'affichage pour afficher une image ; et
un appareil selon l'une quelconque des revendications 4, 5 et 6.

**8.** Appareil selon la revendication 4 comprenant :

une unité de détermination d'image fixe (393), pour déterminer si le signal de télévision est une image fixe ou non, à partir du signal différentiel et du signal différentiel absolu ; dans lequel le résultat, pour déterminer si le signal de télévision est une partie convertie en télécinéma, est basé sur le signal d'indication de partie convertie en télécinéma, sur la sortie de l'unité de détermination d'image fixe (393), et sur le signal indicatif d'un défaut d'édition ; et dans lequel les deux trames sont une trame courante (n), une trame précédente (n - 1) et une trame suivante (n + 1) par rapport à des signaux de télévision d'entrée consécutifs, 'n' étant égal à 1, 2, 3... ;

**9.** Appareil selon la revendication 8, dans lequel le moyen (300) pour générer un signal différentiel comprend :

une unité de détection d'image en ajustement 3:2 (ou 3:2 *pull-down*) (310), pour détecter une image en ajustement 3:2 ; et
une unité de détection d'image en ajustement 2:2 (ou 2:2 *pull-down*) (330), pour détecter une image en ajustement 2:2.

**10.** Appareil selon la revendication 9, dans lequel l'unité de détection d'image en ajustement 3:2 (310) comprend :

17

une unité principale de détection (310) pour détecter l'image en ajustement 3:2 à partir du signal différentiel, qui est un signal différentiel absolu additionné, entre des trames espacées les unes des autres d' 1 période ; et
une sous-unité de détection (330) pour détecter l'image en ajustement 3:2 à partir d'un signal différentiel absolu dérivé par rapport à la différence absolue additionnée, entre les trames espacées d' 1 période.

11. Appareil selon la revendication 10, dans lequel l'unité de détection d'image en ajustement 3:2 (310) détecte l'image en ajustement 3:2, en générant des motifs du signal différentiel entre les trames espacées d' 1 période, et des motifs du signal différentiel absolu, et en comparant les motifs des signaux différentiels et les motifs des signaux différentiels absolus avec un motif de base de l'image en ajustement 3:2.

12. Appareil selon la revendication 9, dans lequel l'unité de détection d'image en ajustement 2:2 (300) comprend :

une unité principale de détection (350) pour détecter l'image en ajustement 2:2, à partir du signal différentiel additionné entre les trames consécutives ; et
une sous-unité de détection (370) pour détecter l'image en ajustement 2:2, à partir d'un signal différentiel absolu.

13. Appareil selon la revendication 12, dans lequel l'unité de détection d'image en ajustement 2:2 (350) détecte l'image en ajustement 2:2, en générant des motifs des signaux différentiels entre les trames consécutives, et des motifs des signaux différentiels absolus, et en comparant les motifs des signaux différentiels et les motifs des signaux différentiels absolus avec un motif de base de l'image en ajustement 2:2.

14. Procédé selon la revendication 1 consistant à :

juger si le signal d'image d'entrée est une image fixe, à partir des signaux différentiels, qui sont des différences absolues additionnées, et les signaux différentiels absolus ; et
décider si le signal de télévision est la partie convertie en télécinéma ou pas, sur la base du signal d'indication de partie convertie en télécinéma, du résultat de jugement pour savoir si le signal d'image d'entrée est une image fixe, et du signal indicatif d'un défaut d'édition

15. Procédé selon la revendication 14, dans lequel l'étape de détection de partie convertie en télécinéma comprend :

une étape de détection d'image en ajustement 3:2, pour détecter une image en ajustement 3:2 ; et
une étape de détection d'image en ajustement 2:2, pour détecter une image en ajustement 2:2.

16. Procédé selon la revendication 15, dans lequel l'étape de détection d'image en ajustement 3:2 comprend :

une étape principale de détection, pour détecter l'image en ajustement 3:2 à partir du signal différentiel généré en fonction de la différence absolue additionnée entre les trames espacées les unes des autres d' 1 période ; et
une sous-étape de détection, pour détecter l'image en ajustement 3:2 à partir du signal différentiel absolu généré en fonction des différences absolues additionnées entre les trames espacées d' 1 période.

17. Procédé selon la revendication 15, dans lequel l'étape de détection d'image en ajustement 2:2 comprend :

une étape principale de détection, pour détecter l'image en ajustement 2:2 à partir du signal différentiel généré en fonction de la différence absolue additionnée entre les trames consécutives ; et
une sous-étape de détection, pour détecter l'image en ajustement 2:2 à partir du signal différentiel absolu généré en fonction de la différence absolue additionnée entre les signaux différentiels.

18. Procédé selon la revendication 16, dans lequel l'étape principale de détection consiste à :

mémoriser successivement les signaux différentiels entre les trames espacées d' 1 période ;
calculer une première valeur de seuil à l'aide des signaux différentiels mémorisés successivement ;
générer des motifs des signaux différentiels mémorisés en fonction de la première valeur de seuil calculée ;
mémoriser successivement les motifs des signaux différentiels ; et
comparer les motifs mémorisés des signaux différentiels, avec un motif de base prédéterminé du signal différentiel, et
l'étape principale de détection détecte l'image en ajustement 3:2, en fonction du résultat de la comparaison par l'étape de comparaison des motifs de signaux différentiels.

**19.** Procédé selon la revendication 18, dans lequel la sous-étape de détection consiste à :

mémoriser successivement les signaux différentiels absolus générés en fonction des signaux différentiels entre les trames espacées d' 1 période ;
calculer une deuxième valeur de seuil à l'aide des signaux différentiels absolus mémorisés successivement ;
générer des motifs des signaux différentiels absolus en fonction de la deuxième valeur de seuil calculée ;
mémoriser successivement les motifs des signaux différentiels absolus ; et
comparer les motifs des signaux différentiels absolus mémorisés, avec un motif de base prédéterminé des signaux différentiels absolus,

dans lequel la sous-étape de détection détecte l'image en ajustement 3:2, en fonction du résultat de la comparaison dans l'étape de comparaison des motifs de signaux différentiels absolus.

**20.** Procédé selon la revendication 17, dans lequel l'étape principale de détection consiste à :

mémoriser successivement les signaux différentiels entre les trames consécutives ;
calculer une première valeur de seuil à l'aide des signaux différentiels mémorisés successivement ;
générer des motifs des signaux différentiels en fonction de la première valeur de seuil calculée ;
mémoriser successivement les motifs des signaux différentiels ; et
comparer les motifs mémorisés des signaux différentiels, avec un motif de base prédéterminé du signal différentiel,

dans lequel l'étape principale de détection détecte l'image en ajustement 2:2, en fonction du résultat de la comparaison par l'étape de comparaison des motifs de signaux différentiels.

**21.** Procédé selon la revendication 17, dans lequel la sous-étape de détection consiste à :

mémoriser successivement les signaux différentiels absolus ;
calculer une deuxième valeur de seuil à l'aide des signaux différentiels absolus mémorisés successivement ;
générer des motifs des signaux différentiels absolus en fonction de la deuxième valeur de seuil calculée ;
mémoriser successivement les motifs des signaux différentiels absolus ; et
comparer les motifs des signaux différentiels absolus mémorisés, avec un motif de base prédéterminé des signaux différentiels absolus,

dans lequel la sous-étape de détection détecte l'image en ajustement 2:2, en fonction du résultat de la comparaison par l'étape de comparaison des motifs de signaux différentiels absolus.

# FIG. 1

FRAME 1 → T1 B1 T1

FRAME 2 → B2 T2

FRAME 3 → B3 T3 B3

FRAME 4 → T4 B4 · · ·

· · ·

# FIG. 2

FIELD BUFFER 1 (201) → FIELD BUFFER 2 (203) → FIELD BUFFER 3 (202)

(204) + ⊕ −

ACCUMULATING (206) ← MAKE ABSOLUTE VALUE (205)

LIMITING (207)

BANDPASS FILLERING (208) → POWER CALCULATING (209) → MODE DETECTING (210)

# FIG. 3

# FIG. 4

310

FILED n
FIELD n-2

313
SAD
CALCULATION
UNIT

317
FIRST
THRESHOLD VALUE
CALCULATION UNIT

321
FIRST PATTERN
STORAGE
UNIT

315
SAD STORAGE
UNIT

MUX
0
1

319
FIRST PATTERN
GENERATION
UNIT

323
FIRST PATTERN
COMPARISON
UNIT

3:2 MAIN DETECTION UNIT

333
ABSOLUTE
CHANGE AMOUNT
CALCULATION
UNIT

337
SECOND
THRESHOLD VALUE
CALCULATION UNIT

341
SECOND PATTERN
STORAGE
UNIT

335
ABSOLUTE
CHANGE AMOUNT
STORAGE
UNIT

MUX
0
1

339
SECOND PATTERN
GENERATION
UNIT

343
SECOND PATTERN
COMPARISON
UNIT

3:2 SUB DETECTION UNIT

330

EP 1 501 298 B1

# FIG. 5

317

317a    317b

SAD BUFFER FIFO

SAD

i=i+1

MIN TEST

MAX TEST

NO    i = 5

YES    i=0

MIN (1st,2nd...)

MAX (1st,2nd...)

T1 = a * MIN + b * MAX

T

# FIG. 6

337

MIN TEST

337a

MAX TEST

337b

MIN (1st, 2nd...)

MAX (1st, 2nd...)

$$T2 = a' * MIN' + b' * MAX'$$

T

|ΔSAD| BUFFER FIFO

|ΔSAD|

# FIG. 7

FILED n

FIELD n-2

350

## 3:2 MAIN DETECTION UNIT

353 — SAD CALCULATION UNIT

355 — SAD STORAGE UNIT

357 — FIRST THRESHOLD VALUE CALCULATION UNIT

361 — FIRST PATTERN STORAGE UNIT

359 — FIRST PATTERN GENERATION UNIT

363 — FIRST PATTERN COMPARISON UNIT

MUX  0  1

## 3:2 SUB DETECTION UNIT

373 — ABSOLUTE CHANGE AMOUNT CALCULATION UNIT

375 — ABSOLUTE CHANGE AMOUNT STORAGE UNIT

377 — SECOND THRESHOLD VALUE CALCULATION UNIT

381 — SECOND PATTERN STORAGE UNIT

379 — SECOND PATTERN GENERATION UNIT

383 — SECOND PATTERN COMPARISON UNIT

MUX  0  1

370

EP 1 501 298 B1

# FIG. 8

357

SAD BUFFER FIFO

SAD

357a

MIN
TEST

MIN
(1st, 2nd...)

357b

MAX
TEST

MAX
(1st, 2nd...)

$$T3 = c * MIN + d * MAX$$

T

# FIG. 9

377

|ΔSAD| BUFFER FIFO

|ΔSAD|

377a

MIN
TEST

MIN
(1st, 2nd...)

377b

MAX
TEST

MAX
(1st, 2nd...)

$$T4 = c' * MIN' + d' * MAX'$$

T

# FIG. 10

START

S1010 — CALCULATING SADS AMONG CURRENT FIELD (n), PREVIOUS FIELD (n-1), AND NEXT FIELD (n+1)

S1020 — DETECTING PULL-DOWN IMAGE BASED ON THE CALCULATED SADS

S1030 — DETERMINING WHETHER INPUT IMAGE SIGNAL IS STILL IMAGE BASED ON THE SADS AND ABSOLUTE CHANGE AMOUNTS BETWEEN SADS

S1040 — DETECTING WHETHER BAD-EDIT OCCURS IN PULL-DOWN IMAGE

S1050 — DECIDING PULL-DOWN IMAGE BY COMBINING RESULTS OF DETECTING PULL-DOWN IMAGE, DETECTING STILL IMAGE AND JUDGING THE OCCURRENCE OF BAD-EDIT

END

# FIG. 11

START

S1101 — CONSECUTIVELY STORING SADS BETWEEN ONE PERIOD-SPACED FIELDS

S1103 — CALCULATING FIRST THRESHOLD VALUE BASED ON THE CONSECUTIVELY STORED SADS

S1105 — GENERATING PATTERNS OF SADS ACCORDING TO THE FIRST THRESHOLD VALUE

S1107 — CONSECUTIVELY STORING THE GENERATED PATTERNS OF SADS

S1109 — COMPARING THE STORED PATTERNS OF SADS WITH A PREDETERMINED BASIC PATTERN OF SADS

S1111 — DETECTING 3:2 PULL-DOWN IMAGE ACCORDING TO THE RESULT OF COMPARISON

# FIG. 12

START

S1201 — CONSECUTIVELY STORING ABSOLUTE CHANGE AMOUNTS OF SADS BETWEEN ONE PERIOD-SPACED FIELDS

S1203 — CALCULATING SECOND THRESHOLD VALUE BASED ON THE CONSECUTIVELY STORED ABSOLUTE CHANGE AMOUNTS

S1205 — GENERATING PATTERNS OF ABSOLUTE CHANGE AMOUNTS ACCORDING TO THE SECOND THRESHOLD VALUE

S1207 — CONSECUTIVELY STORING THE GENERATED PATTERNS OF ABSOLUTE CHANGE AMOUNTS

S1209 — COMPARING THE STORED PATTERN OF ABSOLUTE CHANGE AMOUNTS WITH A PREDETERMINED BASIC PATTERN OF ABSOLUTE CHANGE AMOUNTS

S1211 — DETECTING 3:2 PULL-DOWN IMAGE ACCORDING TO THE RESULT OF COMPARISON

# FIG. 13

```
                    ( START )
                        │
S1301~  ┌──────────────────────────────────────┐
        │ CONSECUTIVELY STORING SADS BETWEEN     │
        │        CONSECUTIVE FIELDS              │
        └──────────────────────────────────────┘
                        │
S1303~  ┌──────────────────────────────────────┐
        │ CALCULATING FIRST THRESHOLD VALUE BASED ON │
        │      THE CONSECUTIVELY STORED SADS      │
        └──────────────────────────────────────┘
                        │
S1305~  ┌──────────────────────────────────────┐
        │ GENERATING PATTERNS OF SADS ACCORDING TO │
        │        THE FIRST THRESHOLD VALUE        │
        └──────────────────────────────────────┘
                        │
S1307~  ┌──────────────────────────────────────┐
        │ CONSECUTIVELY STORING THE PATTERNS OF SADS │
        └──────────────────────────────────────┘
                        │
S1309~  ┌──────────────────────────────────────┐
        │   COMPARING THE PATTERNS OF SADS WITH   │
        │ A PREDETERMINED BASIC PATTERN OF SADS   │
        └──────────────────────────────────────┘
                        │
S1311~  ┌──────────────────────────────────────┐
        │     DETECTING 2:2 PULL-DOWN IMAGE       │
        │ ACCORDING TO THE RESULT OF COMPARISON   │
        └──────────────────────────────────────┘
                        │
```

# FIG. 14

START

S1401 — CONSECUTIVELY STORING ABSOLUTE CHANGE AMOUNTS OF SADS BETWEEN CONSECUTIVE FIELDS

S1403 — CALCULATING SECOND THRESHOLD VALUE BASED ON THE CONSECUTIVELY STORED ABSOLUTE CHANGE AMOUNTS

S1405 — GENERATING PATTERNS OF ABSOLUTE CHANGE AMOUNTS ACCORDING TO THE SECOND THRESHOLD VALUE

S1407 — CONSECUTIVELY STORING THE PATTERNS OF ABSOLUTE CHANGE AMOUNTS

S1409 — COMPARING THE PATTERNS OF ABSOLUTE CHANGE AMOUNTS WITH A PREDETERMINED BASIC PATTERN OF ABSOLUTE CHANGE AMOUNTS

S1411 — DETECTING 2:2 PULL-DOWN IMAGE ACCORDING TO THE RESULT OF COMPARISON

# FIG. 15A

| Y | | Z | | A | | A | | B | | C | | D | | E | | E | | F |
|---|---|---|---|---|---|---|---|---|---|---|---|---|---|---|---|---|---|---|
| | Y | | Z | | A | | B | | C | | C | | D | | E | | F | |

|  |  |  |  |  |  |  |  |  |  |  |  |  |  |  |  |  |  |  |
|---|---|---|---|---|---|---|---|---|---|---|---|---|---|---|---|---|---|---|
| 2:2 C-N | | 0 | X | 0 | X | 0 | 0 | X | 0 | X | 0 | 0 | X | 0 | X | 0 | 0 | X | 0 |
| 2:2 C-P | 0 | X | 0 | X | 0 | 0 | X | 0 | X | 0 | 0 | X | 0 | X | 0 | 0 | X | 0 | |
| 3:2 P-N | 0 | 1 | 1 | 1 | 1 | 0 | 1 | 1 | 1 | 1 | 0 | 1 | 1 | 1 | 1 | 0 | 1 | 1 | |
| | 1 | 2 | 3 | 4 | | 1 | 2 | 3 | 4 | | | | | | | | | | |

# FIG. 15B

**1**

| Y | | Z | | A | | | | B | | C | | D | | E | | E | | F |
|---|---|---|---|---|---|---|---|---|---|---|---|---|---|---|---|---|---|---|
| | Y | | Z | | | | | B | | C | | C | | D | | E | | F | |

**2**   1=2

| Y | | Z | | | | A | | B | | C | | D | | E | | E | | F |
|---|---|---|---|---|---|---|---|---|---|---|---|---|---|---|---|---|---|---|
| | Y | | Z | | | | B | | C | | C | | D | | E | | F | |

| | | | | | | | | | | | | | | | | | | | | |
|---|---|---|---|---|---|---|---|---|---|---|---|---|---|---|---|---|---|---|---|---|
| 2:2 C-N | | 0 | X | 0 | | X | | X | 0 | X | 0 | 0 | X | 0 | X | 0 | 0 | X | 0 |
| 2:2 C-P | 0 | X | 0 | X | | X | | 0 | X | 0 | 0 | X | 0 | X | 0 | 0 | X | 0 | |
| 3:2 P-N | 0 | 1 | 1 | 1 | | 1 | | 1 | 1 | 1 | 0 | 1 | 1 | 1 | 1 | 1 | 0 | 1 | 1 |

**6**

| Y | | Z | | A | | A | | B | | | | D | | E | | E | | F |
|---|---|---|---|---|---|---|---|---|---|---|---|---|---|---|---|---|---|---|
| | Y | | Z | | A | | B | | C | | | | D | | E | | F | |

**7**   6=7

| Y | | Z | | A | | A | | B | | | | D | | E | | E | | F |
|---|---|---|---|---|---|---|---|---|---|---|---|---|---|---|---|---|---|---|
| | Y | | Z | | A | | B | | | | C | | D | | E | | F | |

| | | | | | | | | | | | | | | | | | | | | |
|---|---|---|---|---|---|---|---|---|---|---|---|---|---|---|---|---|---|---|---|---|
| 2:2 C-N | | 0 | X | 0 | X | 0 | 0 | X | 0 | X | | X | | 0 | X | 0 | 0 | X | 0 |
| 2:2 C-P | 0 | X | 0 | X | 0 | 0 | X | 0 | X | | X | | 0 | X | 0 | 0 | X | 0 | |
| 3:2 P-N | 0 | 1 | 1 | 1 | 1 | 0 | 1 | 1 | 1 | | 1 | | 1 | 1 | 1 | 0 | 1 | 1 | |

# FIG. 15C

3

| | Y | Z | A | | B | C | D | E | E | F |

|  | 2:2 C-N | 0 X 0 X 0 X X 0 0 X 0 X 0 0 X 0 |
|  | 2:2 C-P | 0 X 0 X 0 X X 0 0 X 0 X 0 0 X 0 |
|  | 3:2 P-N | 0 1 1 1 1 1 1 1 0 1 1 1 1 0 1 1 |

8

|  | 2:2 C-N | 0 X 0 X 0 0 X 0 X 0 X X 0 0 X 0 |
|  | 2:2 C-P | 0 X 0 X 0 0 X 0 X 0 X X 0 0 X 0 |
|  | 3:2 P-N | 0 1 1 1 1 0 1 1 1 1 1 1 1 0 1 1 |

# FIG. 15D

4

|  | 2:2 C-N | 0 X 0 X 0 0 X 0 0 X 0 X 0 0 X 0 |
|  | 2:2 C-P | 0 X 0 X 0 0 X 0 0 X 0 X 0 0 X 0 |
|  | 3:2 P-N | 0 1 1 1 1 0 1 1 0 1 1 1 1 0 1 1 |

9

|  | 2:2 C-N | 0 X 0 X 0 0 X 0 X 0 X X 0 0 X 0 |
|  | 2:2 C-P | 0 X 0 X 0 0 X 0 X 0 0 X 0 0 X 0 |
|  | 3:2 P-N | 0 1 1 1 1 0 1 1 1 1 0 1 1 0 1 1 |

# FIG. 15E

|          | Y | Z | A | A |   | C | D | E | E | F |
|----------|---|---|---|---|---|---|---|---|---|---|
|          | Y | Z | A | B |   | C | D | E | F |   |

|          |   |   |   |   |   |   | B |   |   |   |   |   |   |   |   |   |
|----------|---|---|---|---|---|---|---|---|---|---|---|---|---|---|---|---|
| 2:2 C-N  | 0 | X | 0 | X | 0 | 0 | X | X | 0 | X | 0 | X | 0 | 0 | X | 0 |
| 2:2 C-P  | 0 | X | 0 | X | 0 | 0 | X | X | 0 | X | 0 | X | 0 | 0 | X | 0 |
| 3:2 P-N  | 0 | 1 | 1 | 1 | 1 | 0 | 1 | 1 | 1 | 1 | 1 | 1 | 1 | 0 | 1 | 1 |

|          | Y | Z | A | A | B | C | D |   | E | F |
|----------|---|---|---|---|---|---|---|---|---|---|
|          | Y | Z | A | B | C | C |   | E | F |   |

| 2:2 C-N  | 0 | X | 0 | X | 0 | 0 | X | 0 | X | 0 | 0 | X | X | 0 | X | 0 |
|----------|---|---|---|---|---|---|---|---|---|---|---|---|---|---|---|---|
| 2:2 C-P  | 0 | X | 0 | X | 0 | 0 | X | 0 | X | 0 | 0 | X | X | 0 | X | 0 |
| 3:2 P-N  | 0 | 1 | 1 | 1 | 1 | 0 | 1 | 1 | 1 | 1 | 0 | 1 | 1 | 1 | 1 | 1 |

# FIG. 15F

|          | Y | Z | A | A | B | C | D | * | E | E |
|----------|---|---|---|---|---|---|---|---|---|---|
|          | Y | Z | A | B | C | C | D | * | E |   |

| 2:2 C-N  | 0 | X | 0 | X | 0 | 0 | X | 0 | X | 0 | 0 | X | 0 | X | 0 | 0 | X | 0 |
|----------|---|---|---|---|---|---|---|---|---|---|---|---|---|---|---|---|---|---|
| 2:2 C-P  | 0 | X | 0 | X | 0 | 0 | X | 0 | X | 0 | 0 | X | 0 | X | 0 | 0 | X | 0 |
| 3:2 P-N  | 0 | 1 | 1 | 1 | 1 | 0 | 1 | 1 | 1 | 1 | 0 | 1 | 1 | 1 | 1 | 0 | 1 | 1 |

|          | Y | Z | A | A | B | * | C | D | E | E |
|----------|---|---|---|---|---|---|---|---|---|---|
|          | Y | Z | A | B | * | C | C | D | E |   |

| 2:2 C-N  | 0 | X | 0 | X | 0 | 0 | X | 0 | X | 0 | X | 0 | 0 | X | 0 | X | 0 | 0 |
|----------|---|---|---|---|---|---|---|---|---|---|---|---|---|---|---|---|---|---|---|
| 2:2 C-P  | 0 | X | 0 | X | 0 | 0 | X | 0 | X | 0 | X | 0 | 0 | X | 0 | X | 0 | 0 |
| 3:2 P-N  | 0 | 1 | 1 | 1 | 1 | 0 | 1 | 1 | 1 | 1 | 1 | 1 | 0 | 1 | 1 | 1 | 1 | 0 |

# FIG. 16A

|           |   |   |   |   |   |   |   |   |   |
|-----------|---|---|---|---|---|---|---|---|---|
| 2:2 C-N  | 0 | X | 0 | X | 0 | X | 0 | X | 0 |
| 2:2 C-P  | 0 | X | 0 | X | 0 | X | 0 | X | 0 |
| SELECT FIELD | N | P | N | P | N | P | N | P | N | P |

# FIG. 16B

|           |   |   |   |   |   |   |   |   |   |
|-----------|---|---|---|---|---|---|---|---|---|
| 2:2 C-N  | 0 | X | 0 |   | 0 | X | 0 | X | 0 |
| 2:2 C-P  | 0 | X | 0 | X |   | X | 0 | X | 0 |
| SELECT FIELD | N | P | N | P |   | X | N | P | N | P |

# FIG. 16C

|           |   |   |   |   |   |   |   |   |   |   |
|-----------|---|---|---|---|---|---|---|---|---|---|
| 2:2 C-N  | 0 | X | 0 | X | 0 | 0 | X | 0 | X | 0 |
| 2:2 C-P  | 0 | X | 0 | X | 0 | 0 | X | 0 | X | 0 |
| SELECT FIELD | N | P | N | P | N | P | P | N | P | N | P |

# FIG. 16D

|           |   |   |   |   |   |   |   |
|-----------|---|---|---|---|---|---|---|
| 2:2 C-N  | 0 | X | 0 | X |   | X | X | 0 |
| 2:2 C-P  | 0 | X | 0 | X | X | X | 0 | X |
| SELECT FIELD | N | P | N | P | X | X | N | P |